(19) **Europäisches Patentamt European Patent Office Office européen des brevets**

(11) **EP 4 782 706 A1**

(12) **EUROPEAN PATENT APPLICATION**
published in accordance with Art. 153(4) EPC

(43) Date of publication:
29.07.2026 Bulletin 2026/31

(51) International Patent Classification (IPC):
F16B 5/08 (2006.01)          B23K 35/30 (2006.01)
B23K 26/21 (2014.01)          B21D 22/02 (2006.01)

(21) Application number: 24867495.4

(22) Date of filing: 19.09.2024

(86) International application number:
PCT/CN2024/119654

(87) International publication number:
WO 2025/061089 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.09.2023 CN 202311215153

(71) Applicant: Easyforming Technology Co., Ltd.
Suzhou, Jiangsu , 215000 (CN)

(72) Inventors:
• YI, Hongliang
  Suzhou, Jiangsu 215000 (CN)
• LI, Zhengxian
  Suzhou, Jiangsu 215000 (CN)
• CHEN, Yilin
  Suzhou, Jiangsu 215000 (CN)
• ZHOU, Shu
  Suzhou, Jiangsu 215000 (CN)
• LIU, Zhenwei
  Suzhou, Jiangsu 215000 (CN)

(74) Representative: Rüger Abel Patentanwälte
PartGmbB
Webergasse 3
73728 Esslingen a. N. (DE)

(54) **HOT STAMPED COMPONENT AND LASER TAILOR-WELDED PRE-COATED STEEL PLATE**

(57) The present invention relates to a hot-stamped component formed by hot stamping a laser tailor-welded component. The present invention further relates to a laser tailor-welded component obtained by performing laser tailor-welding on a pre-coated steel plate, a method for forming the laser tailor-welded component, and a welding wire suitable for laser tailor-welding.

Figure 2

**Description**

Technical Field

This invention relates to a laser tailor-welded component obtained by laser tailor-welding pre-coated steel sheets, and a hot-stamped component made therefrom, wherein the pre-coated steel sheets are hot-stamping pre-coated steel sheets with an aluminum or aluminum alloy pre-coating. The invention also relates to a method for forming said laser tailor-welded component.

Background

In recent years, with the urgent need for energy conservation, environmental protection, and improved safety requirements, lightweight and safety have become common pursuits in the automotive manufacturing industry. High-strength steel has garnered increasing attention in the field. As the highest strength grade among automotive steels, the application proportion of hot-stamping steel in automotive materials has been increasing annually. If bare sheets are used for hot stamping, surface oxidation of the steel sheet is inevitable, which can affect the surface quality of the molds, the quality of the parts, and subsequent automotive assembly and painting processes. Using hot-stamping steel sheets with pre-coatings can effectively prevent surface oxidation and decarburization while enhancing the corrosion resistance of the steel sheet. Among the pre-coated hot-stamping steel products developed domestically and internationally, aluminum-silicon (Al-Si) pre-coated hot-stamping steel is the most widely used.

In automotive manufacturing, the laser tailor-welding method can weld steel sheets of different thicknesses, different materials, and even different surface states together. This method allows placing the required material exactly where it is needed on the part, thereby achieving optimized cost, weight, and safety performance. Hot stamping the laser-welded blank can reduce the number of body parts while reducing weight, improve manufacturing precision, and give parts better crash performance, with a more pronounced lightweighting effect.

To meet more stringent crash requirements while achieving maximum lightweighting, various tailor-welded components have emerged. Tailor-welded components can not only be made from materials (e.g., steel sheets) with the same strength and thickness but also from combinations of materials with different strengths (strength grades include, for example, tensile strength grades of 500MPa, 1000MPa, 1500MPa, 2000MPa, etc.) and thicknesses. However, according to the existing technology, when laser welding aluminum or aluminum alloy pre-coated sheets of different strength grades to form tailor-welded components, the following problems exist.

Problem 1:The initial pre-coating on the surface of the aluminum or aluminum alloy pre-coated steel sheet may adversely affect the weld seam quality. This is because the pre-coating (especially the Al-Si pre-coating) melts into the weld seam during the welding process, causing the following defects in the weld seam: In areas with relatively high aluminum content, intermetallic compound regions form, which have high brittleness after hot stamping and are therefore prone to inducing cracks during service, accelerating weld seam failure; in areas with relatively low aluminum content, ferrite forms, preventing the weld seam microstructure from fully austenitizing during the hot stamping process, resulting in a dual-phase microstructure of martensite and ferrite after the hot stamping process. Consequently, areas with different mechanical strengths form within the weld seam, affecting the mechanical properties of the weld.

Problem 2:When materials of different strength grades or different thicknesses are welded together, the weld seam is prone to fail first during service. This is because the material compositions of different strength grades have certain differences. The composition of the weld seam formed after laser welding is a mixture of the different materials from both sides, and its physical properties are also different from those of the base materials on either side. Thus, the weld seam easily becomes the weakest area. After hot stamping, the weld seam is prone to fail first during service.

Problem 3:Existing welding wires are difficult to suit the welding of various material combinations. In practical engineering applications, there is a certain gap between the welding surfaces of the materials to be welded. Wire filler welding can be used to ensure the formation of the weld seam. Existing welding wires are usually only suitable for one specific material combination and cannot achieve good results in the laser welding of steel sheet combinations with multiple strength grades and multiple thickness specifications.

Problem 4:High-strength weld seams often lack toughness and carry a high risk of hydrogen-induced delayed cracking. For example, 2000MPa grade materials, due to their high carbon content in the base material composition, have high martensite hardenability after hot forming and pose a more significant risk of delayed cracking. Therefore, for laser welding of 2000MPa grade materials, while ensuring weld strength, attention should also be paid to reducing the risk of delayed cracking in the weld.

To solve some of the above problems, certain attempts already exist in the prior art. For example, one type of method proposes stripping the pre-coating near the welding area before welding to reduce the Al content entering the weld seam and ensure as little ferrite content as possible in the weld seam. However, this method requires an additional stripping step, has disadvantages in terms of production cost and product stability, and does not help improve weld toughness. Another type of method uses laser wire filler welding to improve weld characteristics by melting a welding wire of specific composition into the weld seam. However, existing laser wire filler welding methods and products have many shortcomings.

For example, CN104023899A notes that aluminum from the pre-coating may enter the welding zone during laser welding, leading to deterioration of the physical properties of the welding zone. It proposes adding a high-carbon, high-manganese welding wire to neutralize the effect of aluminum in the pre-coating, thereby ensuring the weld zone can obtain a fully austenitic microstructure during the hot stamping heating process. However, production and use have found that high-carbon, high-manganese welding wires are difficult to produce and draw. Furthermore, when welding high-strength hot stamping steels with high carbon content (e.g., greater than 0.3 wt.%), adding high-carbon, high-manganese welding wire results in poor toughness of the final weld seam and a high risk of delayed cracking.

CN111215751A provides a steel differential strength welded component with an aluminum or aluminum alloy pre-coating, formed by butt welding a high-strength steel sheet with a post-hot-stamping tensile strength of 1300MPa-1700MPa and a low-strength steel sheet with a post-hot-stamping tensile strength of 400MPa-700MPa. During welding, the butt gap between the two steel sheets to be welded must be maintained at 0.2-0.5mm, which imposes high requirements on sheet processing precision and positioning accuracy. On the other hand, the technology of this document can only solve the problem of butt welding two specific grades (i.e., 400-700MPa and 1300-1700MPa) of hot stamping steel. Actual industrial production often involves tailor welding combinations of steel sheets with various thicknesses and strengths. The technical solution provided in this document cannot meet production needs.

Similarly, CN111230301A provides a manufacturing method for a steel thin sheet welded equal-strength component with an aluminum or aluminum alloy pre-coating, welding equal-strength steel sheets with aluminum or aluminum alloy pre-coatings using a process involving reserved gap and wire filler welding. However, this technology requires pre-setting the butt gap between the two steel sheets to be welded to 0.2-0.5mm, imposing high requirements on sheet processing precision and positioning accuracy. On the other hand, the technology of this document can only solve the problem of tailor welding equal-strength components, while actual industrial production often involves tailor welding combinations of steel sheets with various thicknesses and strengths. The technical solution provided in this document cannot meet production needs.

CN111432975A provides a laser wire filler welding method for coated sheets with aluminum or aluminum alloy pre-coatings. It introduces the concept of a welding joint quenching factor and obtains a high-hardenability welding joint by adding a high-alloy welding wire, thereby ensuring the strength of the welding joint. However, although this technology improves the hardenability of the welding joint by adding a certain amount of Ni, ensuring the weld seam obtains a fully martensitic microstructure after hot stamping, it does not consider the hardenability of the welding joint. For some special welding combinations (e.g., differential thickness sheet welding, where the base material on the thick sheet side has lower yield strength after hot stamping and the base material on the thin sheet side has higher yield strength after hot stamping), to ensure the performance of the weld joint of the final hot-stamped component is better than the base material, it is necessary to ensure that the hardenability of part of the weld joint area is higher than that of the base material. The technology of this document cannot achieve this.

Therefore, there exists a need in the art: to achieve high-quality laser tailor welding for various combinations (including equal strength, unequal strength, equal thickness, unequal thickness combinations) of commonly used 1000~2000MPa grade hot stamping steels on the market at low cost, with high weld strength, good toughness, and strong resistance to hydrogen-induced delayed cracking.

Summary of the Invention

The present invention aims to provide an improved hot-stamped component formed from a laser-welded blank by hot stamping, capable of overcoming the problems described above. The present invention aims to provide a laser-welded blank suitable for hot stamping forming, capable of overcoming the problems described above to meet industry needs.

The present invention also aims to provide advantageous manufacturing methods for this improved laser-welded blank and advantageous welding wire compositions.

One focus of the present invention is to achieve high-quality laser tailor welding for various combinations of hot stamping steels with aluminum or aluminum alloy pre-coatings (involving various tensile strength grades and various thickness specifications).

Another focus of the present invention is to achieve the aforementioned high-quality laser tailor welding with low cost and a simplified process.

Another focus of the present invention is to provide an improved welding wire for laser welding, which can achieve good welding quality for multiple combinations of strength and thickness of the steel sheets to be welded. Further advantageously, this welding wire can well adapt to a wide range of variations in the butt gap between steel sheets, possessing strong versatility.

According to the requirements for excellent performance of hot-stamped components, or according to the requirements for high-quality laser tailor welding, the weld seam (also known as the welding joint) needs to have both excellent strength and excellent resistance to hydrogen-induced delayed cracking: under tensile stress, fracture will occur in the base material (i.e., the welded steel sheet) rather than in the weld seam; simultaneously, the weld seam's resistance to hydrogen-induced delayed cracking is not lower than that of the base material. To achieve such high-quality weld seams, the inventors of the present invention, through intensive research, have obtained the following discoveries regarding the laser tailor welding of hot stamping steel sheets coated with aluminum or aluminum alloy pre-coatings (especially aluminum-silicon pre-coatings).

First, to meet the high strength requirements of the weld seam, a specific relationship between the weld seam and the base material must be satisfied. For welding base materials of the same tensile strength grade, to ensure fracture does not occur in the weld seam during stretching, it is necessary to ensure that the average hardness of the weld seam after hot stamping is not lower than the average hardness of the base material, i.e., $HV_{weld} \geq HV_{base}$.

For welding two base materials of different tensile strength grades, the inventors found that by comprehensively considering the deformation resistance of the weld seam in actual situations and the work hardening capacity of the base materials on both sides, it can be discussed separately according to the following two scenarios:

Scenario 1:The tailor-welded base materials satisfy: $T_1 \times YS_1 \geq 0.9 \times T_2 \times YS_2$, where $YS_1 < YS_2$, and $YS_1$, $YS_2$ are the yield strengths of the first and second base materials after hot stamping, respectively, and $T_1$, $T_2$ are the thicknesses of the first and second base materials, respectively. In this scenario, if only the product of thickness and yield strength (i.e., deformation resistance) is considered, the deformation resistance of the weld seam ($T_w \times YS_w$) is the lowest, i.e.: $T_w \times YS_w < T_2 \times YS_2 < T_1 \times YS_1$, then the weld seam undergoes plastic deformation first and subsequently fails. But actually, the final fracture location is also related to the material's work hardening capacity. Research has found that due to the different work hardening capacities of the base materials on both sides, the risk of weld fracture exists not only when $T_2 \times YS_2 < T_1 \times YS_1$, but also when $0.9T_2 \times YS_2 \leq T_1 \times YS_1$ (the deformation resistance of the first base plate is slightly lower than that of the second base plate). During the tensile process, the area within 0.2mm from the weld edge on the side of the weld seam closer to the base material with higher yield strength is prone to undergo plastic deformation first, causing the weld seam to fail first. Therefore, it is necessary to fill the weld seam with a welding wire containing C and Mn to improve the strength of the weld seam, ensuring that the average hardness within at least 0.2mm from the weld edge on the side of the material with high yield strength is greater than the average hardness of the material with high yield strength. That is, in this scenario, the weld hardness characteristic needs to be guaranteed: $HV_{weld0.2} \geq HV_{high\text{-}strength\ base}$, where $HV_{weld\ 0.2}$ refers to the hardness value within 0.2mm from the fusion line on the side of the high yield strength base material after hot stamping.

Scenario 2:The tailor-welded base materials satisfy: $T_1 \times YS_1 < 0.9 \times T_2 \times YS_2$, where $YS_1 < YS_2$, and $YS_1$, $YS_2$ are the yield strengths of the first and second base materials after hot stamping, respectively, and $T_1$, $T_2$ are the thicknesses of the first and second base materials, respectively. In this scenario,it is sufficient to satisfy $HV_{weld} \geq HV_{low\text{-}strength\ base}$, i.e., the average hardness of the weld seam after hot stamping is not less than the average hardness of the low yield strength base material, to ensure fracture occurs in the base material during tension.

Second, the prior art generally believes that aluminum from the pre-coating of aluminum-silicon pre-coated steel sheets adversely affects weld performance. Therefore, efforts are made either to minimize the aluminum content entering the weld seam (e.g., by locally stripping the pre-coating) or, in the case of high aluminum content in the weld seam, to mitigate the adverse consequences of high aluminum content on weld strength by using high-alloy composition welding wires. Unlike the prior art, the inventors of the present invention have discovered that if the weld alloy composition is appropriate, containing a small amount of aluminum ($0.3wt.\% \leq Al \leq 1.0wt.\%$) in the weld seam not only does not have a noteworthy negative impact on the strength of the weld seam but also helps improve the weld seam's resistance to hydrogen-induced delayed cracking, thereby achieving a balance between weld strength and weld toughness/resistance to hydrogen-induced delayed cracking.

Specifically, to improve weld strength, C and Mn components can be added to the weld seam. However, an increase in C and Mn content tends to make the weld seam hard and brittle, increasing the risk of hydrogen-induced delayed cracking. The inventors of the present invention found that if the weld seam contains an appropriate amount of Al, it can mitigate the hard brittleness caused by higher C and Mn content and improve the resistance to hydrogen-induced delayed cracking. The specific analysis is as follows.

Martensite is produced from austenite through a shear mechanism, meaning the face-centered cubic (FCC) austenite undergoes shear deformation directly transforming into body-centered cubic (BCC) martensite. There are two mechanisms for deformation in metallic materials: dislocation slip and twinning. The actual martensitic transformation mechanism is related to the strength of the austenite during transformation (the difficulty of plastic deformation). If the austenite strength is low and plastic deformation occurs easily, the transformation proceeds via dislocation slip deformation; if the austenite strength is high and plastic deformation is difficult, the transformation can only proceed via twinning deformation. Dislocation martensite has a higher dislocation density and smaller crystal lattice distortion (it still maintains a BCC structure, as more carbon atoms can be accommodated on dislocation lines), therefore dislocation martensite has good work hardening capacity and thus high toughness. Twinned martensite, on the other hand, has lower dislocation density and greater crystal lattice distortion (its dislocation density is low, carbon atoms can only be supersaturatedly solid-solved in the BCC lattice, and the BCC lattice must distort to form a body-centered tetragonal (BCT) structure to solid-solve a higher carbon content). The low dislocation density is not conducive to work hardening, and dislocations cannot slip in the non-three-dimensionally symmetric crystal structure of BCT. Therefore, twinned martensite leads to reduced martensite toughness. The overall toughness of martensite mainly depends on the content of twinned martensite within it.

To meet the weld strength requirements for tailor-welding 2000 MPa grade aluminum or aluminum alloy pre-coated steel sheets (as mentioned above, ensuring weld strength is greater than the base material), the C and Mn content in the weld martensite can be increased to ensure a fully martensitic microstructure after hot stamping and improve martensite strength. However, an increase in C and Mn content is a significant reason for promoting the formation of twinned martensite, which tends to increase weld strength while reducing weld toughness and resistance to hydrogen-induced cracking.

According to the present invention, weld toughening can be achieved by including a small amount of Al in the weld alloy composition. In the BCC crystal structure of martensite, Al atoms can act as substitutional atoms occupying original Fe atom positions. Since Al atoms are larger (Al atomic radius ~0.1434 nm, Fe atomic radius ~0.1241 nm), the substitutional solid solution of Al for Fe causes expansion of the BCC lattice, increasing the original atomic gaps and allowing more interstitial carbon atoms to be accommodated in the BCC structure. This reduces the restriction of dislocation slip caused by the elongation of BCC tetragonality to BCT due to carbon supersaturation. Al element increases the martensite transformation temperature and, due to lattice expansion, reduces the interstitial solid solution strengthening effect of carbon atoms. Both factors lead to a decrease in austenite strength during transformation, thereby improve weld seam toughness.

The inventors found that when the Al content in the weld is greater than 0.3 wt.%, the improvement in the weld's resistance to hydrogen-induced delayed cracking is more pronounced.

Therefore, while appropriately increasing C and Mn content to achieve slight strengthening of the weld, introducing an appropriate Al content can achieve weld toughening and improve resistance to hydrogen-induced delayed cracking. This resolves the contradiction between weld strength and toughness, obtaining a weld with both excellent strength and toughness.

Based on the above concept, the present invention proposes that the weld alloy composition contains appropriate C, Mn, and Al contents, allowing them to cooperate and synergize to achieve stable and excellent weld performance. In other words, the invention innovatively proposes the concept of "weld slight strengthening + weld toughening" through specific C, Mn, and Al contents in the weld.

Accordingly, the invention proposes an evaluation factor FA to assist in judging whether the weld alloy composition is conducive to achieving excellent weld performance. The evaluation factor FA can be derived from the average content by weight percentage of manganese, carbon, and aluminum in the weld, $Mn_{weld}$, $C_{weld}$, $Al_{weld}$, defined as $FA = 10Mn_{weld} + 77C_{weld} - 1900Al_{weld}^2 - 12Al_{weld}$. This evaluation factor can reflect the combined effects of manganese, carbon, and aluminum on weld performance, particularly on resistance to hydrogen-induced delayed cracking. For different welding scenarios, the evaluation factor FA needs to be controlled within the corresponding ranges proposed by the invention.

The optimal alloy composition of the weld is related to the carbon content or tensile strength grade of the tailor-welded steel. As is well known, the carbon content of steel generally corresponds roughly to its tensile strength grade as follows:

Carbon content 0.27 wt.%<C≤0.38 wt.% (especially 0.28~0.38 wt.%) usually corresponds to 2000 MPa grade steel, with tensile strength≥1800 MPa;
Carbon content 0.15 wt.%<C≤0.27 wt.% (especially 0.18~0.26 wt.%) usually corresponds to 1500 MPa grade steel, with tensile strength≥1350 MPa;
Carbon content 0.05 wt.%<C≤0.15 wt.% (especially 0.05~0.12 wt.%) usually corresponds to 1000 MPa grade steel, with tensile strength≥950 MPa.

In the context of the present invention, the content or hardness of components in the weld or base material refers to the average content or hardness, unless otherwise specified. wt.% indicates weight percentage.

To ensure sufficient weld strength, according to the invention, the carbon content in the weld, $C_{weld}$, should be higher than the carbon content in the base material, $C_{base}$, satisfying $C_{base}+0.01wt.\% \leq C_{weld}$. Simultaneously, for cases where the lower tensile strength grade among the welded steel sheets belongs to the 2000 MPa, 1500 MPa, or 1000 MPa grade, the carbon content in the weld, $C_{weld}$, should be no less than 0.32wt.%, 0.19wt.%, and 0.05wt.%, respectively. On the other hand, to ensure weld toughness, the carbon content in the weld should not be too high. When $C_{base}$ does not exceed 0.27wt.%, $C_{weld}$ should not exceed 0.32wt.%. For 2000 MPa grade steel with higher $C_{base}$, to ensure strength,

$C_{weld}$ can be appropriately increased but should still not exceed 0.4wt.%.

The weld evaluation factor FA should be greater than 10% to ensure sufficient weld strength. To ensure weld toughness and resistance to hydrogen-induced delayed cracking, the weld evaluation factor FA should not be too high. The invention found that the upper limit of FA for achieving good weld toughness and resistance to hydrogen-induced delayed cracking varies for different tensile strength grades of the welded steel sheets, and corresponding ranges are given for different situations.

Considering various factors, the present invention proposes the following solution for laser tailor-welding of pre-coated steel sheets of various tensile strength grades:

A laser tailor-welded component comprising:

a first pre-coated steel sheet having a first pre-coating made of aluminum or an aluminum alloy;
a second pre-coated steel sheet having a second pre-coating made of aluminum or an aluminum alloy; and a weld connecting the first pre-coated steel sheet to the second pre-coated steel sheet.
wherein the weld has a weld evaluation factor $FA = 10Mn_{weld} + 77C_{weld} - 1900Al_{weld}^2 - 12Al_{weld}$, where $Mn_{weld}$, $C_{weld}$, $Al_{weld}$ are the manganese, carbon, and aluminum contents in the weld by weight percentage, respectively,
wherein the alloy composition of the weld and the weld evaluation factor FA satisfy the following conditions:

$$1.0\text{wt.}\% \leqslant Mn_{weld} \leqslant 3.0\text{wt.}\%,$$

$$0.3\text{wt.}\% \leqslant Al_{weld} \leqslant 1.0\text{wt.}\%,$$

and

(a) in the case where $0.27\text{ wt.}\% < C_{base} \leqslant 0.38\text{wt.}\%$, satisfy:

$$0.32\text{wt.}\% \leqslant C_{weld} \leqslant 0.4\text{ wt.}\%,$$

$$C_{base} + 0.01\text{wt.}\% \leqslant C_{weld},$$

and

$$10\% \leqslant FA \leqslant 32\%;$$

(b) in the case where $0.15\text{wt.}\% < C_{base} \leqslant 0.27\text{wt.}\%$, satisfy:

$$0.19\text{wt.}\% \leqslant C_{weld} \leqslant 0.32\text{wt.}\%,$$

$$C_{base} + 0.01\text{wt.}\% \leqslant C_{weld},$$

and

$$10\% \leqslant FA \leqslant 30\%;$$

or
(c) in the case where $0.05\text{ wt.}\% < C_{base} \leqslant 0.15\text{wt.}\%$, satisfy:

$$0.05\text{wt.}\% \leqslant C_{weld} \leqslant 0.32\text{wt.}\%,$$

$$C_{base} + 0.01\text{wt.}\% \leqslant C_{weld},$$

and

$$10\% \leqslant FA \leqslant 25\%;$$

wherein, when the tensile strengths of the first pre-coated steel sheet and the second pre-coated steel sheet are different, $C_{base}$ represents the carbon content of the one with the relatively lower tensile strength among the first pre-coated steel sheet and the second pre-coated steel sheet; when the tensile strengths of the first pre-coated steel sheet and the second pre-coated steel sheet are the same, $C_{base}$ represents the carbon content of either the first pre-coated steel sheet or the second pre-coated steel sheet.

That is, the invention proposes corresponding weld alloy compositions for different combinations of steel sheets to be welded. Research has found that when the weld alloy composition satisfies the conditions of the invention, due to the achievement of "weld slight strengthening + weld toughening", even if the weld is formed between steel sheets of different strength grades or thicknesses, it can ensure that the weld has both excellent strength and excellent toughness and resistance to hydrogen-induced delayed cracking. Thus, on the one hand, the invention solves the problem of providing reliable welding between steel sheets of different strength grades and thickness specifications, overcoming the limitations of existing technologies that are only applicable to steel sheets of specific strength grades or specific thickness relationships; on the other hand, the invention overcomes the contradiction between weld strength and toughness/resistance to hydrogen-induced delayed cracking, achieving a balance of various properties.

It is worth noting that the invention can also achieve good results in tailor-welding 2000 MPa grade steel sheets with 2000 MPa grade steel sheets. In fact, ensuring both weld strength and toughness when welding two 2000 MPa grade steel sheets is very challenging. This is because 2000 MPa materials already have a high carbon content (typically between 0.28wt.% and 0.38wt.%), and to ensure that the weld strength of 2000 MPa/2000 MPa grade steel sheets is higher than that of the 2000 MPa grade base material, theoretically, the weld needs to contain higher C and Mn content than the 2000 MPa base material. An increase in C and Mn content in the weld (to about 0.4wt.% or above) tends to produce hard and brittle twinned martensite in the weld, which has poor toughness and weak resistance to delayed cracking risk. Therefore, obtaining a high-quality weld between 2000/2000 MPa grade steel sheets faces the dilemma of wanting to provide high C and Mn content to ensure high weld strength while wanting to avoid high C and Mn content to prevent adverse effects on weld toughness and resistance to hydrogen-induced delayed cracking. Existing technologies cannot solve this dilemma. In fact, 2000 MPa grade steel sheets themselves are cutting-edge emerging products, and related research and development are still in the early stages. The invention solves this dilemma by including an appropriate amount of aluminum in the weld alloy composition to mitigate the adverse effects of increased C and Mn content on weld toughness and resistance to hydrogen-induced delayed cracking.

Furthermore, for martensitic steel, its main strengthening method is the interaction between solute carbon atoms and high-density dislocations. Tough martensite is dislocation martensite (also called lath martensite). Martensitic transformation occurs through shear deformation dependent on dislocation slip. Carbon can stabilize and strengthen austenite. As the C content increases, the difficulty of austenite transforming into martensite during cooling increases, and the martensite transformation temperature decreases. This results in higher dislocation density in the martensite, and these high-density dislocations are pinned by carbon atoms. Therefore, the interaction between higher dislocation density and higher carbon content further increases the strength of martensitic steel. However, the interaction between high carbon content and higher dislocation density significantly reduces the ability of martensite to proliferate dislocations during plastic deformation. Thus, an increase in C content leads to reduced martensite toughness. More critically, dislocations act as hydrogen traps, causing martensite to absorb more hydrogen more easily, and dislocations, as line defects, promote hydrogen diffusion. Therefore, high C content increases the risk of hydrogen-induced delayed cracking in martensite. The present invention aims to overcome the risk of hydrogen-induced delayed cracking caused by weld strengthening. First, the addition of Al element is beneficial for improving the resistance of martensite to hydrogen-induced cracking. On the basis of using Al to improve hydrogen-induced cracking performance, it is further necessary to determine the upper limit of carbon content in the weld. This is particularly important for welding 2000 MPa grade steel with 2000 MPa grade steel.

Through dedicated research, the inventors found that for 2000 MPa grade steel, the C content in the weld should not be greater than 0.4wt.%, otherwise the weld will have a significant risk of delayed cracking. Moreover, when the C content of the weld increases by about 0.06 wt.% compared to the base material, the significant increase in weld strength compared to the base material strength can easily cause stress concentration at the weld/base material interface during deformation. Especially for tailor-welding of 2000 MPa grade steel, where the base material toughness is relatively low, stress concentration can easily lead to delayed cracking risk in the weld. Therefore, preferably, for the case where the carbon content $C_{base}$ of the one with the relatively lower tensile strength among the two pre-coated steel sheets satisfies $0.27wt.\% < C_{base} \leq 0.38wt.\%$, to ensure weld toughness, $C_{weld} \leq C_{base + 0.06}wt.\%$.

Similarly, for the case where the carbon content $C_{base}$ of the one with the relatively lower tensile strength among the first and second pre-coated steel sheets satisfies $0.15wt.\% < C_{base} \leq 0.27wt.\%$, preferably, to further ensure weld toughness and avoid excessive stress concentration at the weld/base material interface due to excessive strength difference between weld and base material, it is necessary to satisfy $C_{weld} \leq C_{base} + 0.11wt.\%$.

Similarly, for the case where the carbon content $C_{base}$ of the one with the relatively lower tensile strength among the first and second pre-coated steel sheets satisfies $0.05wt.\% < C_{base} \leq 0.15wt.\%$, preferably, to further ensure weld toughness, it is necessary to satisfy $C_{weld} \leq C_{base} + 0.30wt.\%$.

Therefore, according to some embodiments, the laser tailor-welded component further satisfies the following conditions:

(a) in the case where $0.27wt.\% < C_{base} \leq 0.38wt.\%$, satisfy:

$$C_{weld} \leq C_{base} + 0.06wt.\%;$$

(b) in the case where $0.15wt.\% < C_{base} \leq 0.27wt.\%$, satisfy:

$$C_{weld} \leq C_{base} + 0.11wt.\%, preferably, C_{weld} \leq C_{base} + 0.1wt.\%;$$

(c) in the case where $0.05wt.\% < C_{base} \leq 0.30wt.\%$, satisfy:

$$C_{weld} \leq C_{base} + 0.30wt.\%;$$

Wherein, when the tensile strengths of the first pre-coated steel sheet and the second pre-coated steel sheet are different, $C_{base}$ represents the carbon content of the one with the relatively lower tensile strength among the first pre-coated steel sheet and the second pre-coated steel sheet; when the tensile strengths of the first pre-coated steel sheet and the second pre-coated steel sheet are the same, $C_{base}$ represents the carbon content of any one of the first pre-coated steel sheet and the second pre-coated steel sheet.

Preferably, the Mn content in the weld alloy composition may be 1.0~2.5wt.%.

Preferably, the Al content in the weld alloy composition may be 0.4~0.8wt.%.

Preferably, the weld alloy composition satisfies:

(a) In the case where the carbon content $C_{base}$ of the one with the relatively lower tensile strength among the first and second pre-coated steel sheets (if the tensile strengths are the same, then it refers to either one of them) conforms to $0.27wt.\% < C_{base} \leq 0.38wt.\%$, the weld evaluation factor satisfies $10\% \leq FA \leq 30\%$;

(b) In the case where the carbon content $C_{base}$ of the one with the relatively lower tensile strength among the first and second pre-coated steel sheets (if the tensile strengths are the same, then it refers to either one of them) conforms to $0.15wt.\% < C_{base} \leq 0.27wt.\%$, the weld evaluation factor satisfies $10\% \leq FA \leq 26\%$;

(c) In the case where the carbon content $C_{base}$ of the one with the relatively lower tensile strength among the first and second pre-coated steel sheets (if the tensile strengths are the same, then it refers to either one of them) conforms to $0.05wt.\% < C_{base} \leq 0.15wt.\%$, the weld evaluation factor satisfies $10\% \leq FA \leq 22\%$;

The Al content in the aluminum or aluminum alloy pre-coating of the present invention is preferably not less than 85wt.%. This pre-coating is, for example, the commonly used aluminum-silicon pre-coating in the field, which preferably comprises 88~95wt.% Al and 5%~12wt.% Si.

The final Al content in the weld seam is related to the thickness of the aluminum or aluminum alloy pre-coating and the thickness of the welded steel sheet. Since the aluminum content in the steel sheet is lower than that in the aluminum or aluminum alloy pre-coating, generally, the greater the thickness of the aluminum or aluminum alloy pre-coating, or the smaller the thickness of the steel sheet, the higher the Al content in the weld seam tends to be.

The inventors of the present invention found that if the average thickness of the aluminum or aluminum alloy pre-coating (especially aluminum-silicon pre-coating) on a single side of the steel sheet is controlled within 6 μm~19 μm, then due to the thinness of the pre-coating itself, even without stripping the pre-coating before welding, the aluminum content melting into the weld seam is relatively low, yet not too low to cause poor weld toughness. By directly using a welding wire with appropriate C and Mn content for laser wire filler welding without stripping the pre-coating, an appropriate alloy weld composition can be achieved. Thus, the present invention is particularly suitable for use with steel sheets having a pre-coating thickness of 6 μm~19 μm, thereby further simplifying the process and reducing costs. Preferably, the thickness of the aluminum or aluminum alloy pre-coating is 8 μm~16 μm. More preferably, the thickness of the aluminum or aluminum alloy pre-coating is 10 μm~16 μm.

In some embodiments, the thickness of the first pre-coated steel sheet and/or the second pre-coated steel sheet is 0.8~3.0mm, preferably 1.0~2.5mm.

The present invention also provides an improved welding wire which, by weight percentage, comprises: C: 0.30~0.45wt.%, preferably 0.35~0.45wt.%. The role of C is primarily solid solution strengthening, which can better meet the strength requirements of the weld seam; Mn: 1.0~3.0wt.%. The role of Mn is primarily to ensure the hardenability of the weld seam, to better ensure the weld seam obtains a fully martensitic microstructure, preferably 1.5~2.5wt.%. According to a particularly advantageous embodiment, besides the aforementioned C and Mn components, the remainder of the welding wire is Fe and inevitable impurities, meaning no other alloy elements need to be added.

In some embodiments, besides C and Mn, the welding wire may also contain Al up to 0.035wt.%. Al is a strong deoxidizer, so for the deoxidation effect during wire smelting, the Al content is required to be above about 0.010wt.%; the welding wire may also contain Si up to 0.022wt.% to serve a solid solution strengthening role and thereby improve the strength of the weld seam.

The present invention innovatively discovered that using the aforementioned welding wire enables high-quality laser tailor welding of aluminum or aluminum alloy pre-coated (especially aluminum-silicon pre-coated) steel sheets with any strength grade between 1000~2000MPa and any thickness combination, improving weld strength, toughness, and stability. On one hand, it overcomes the defects of existing technologies where welding steel sheets of different strengths or different thicknesses together results in uneven weld composition distribution and poor stability of weld performance; on the other hand, it is a "universal" welding wire applicable to various combinations of steel sheet strength and thickness, greatly facilitating production.

In particular, when this type of welding wire is used for laser tailor welding with steel sheets having an aluminum-silicon pre-coating thickness of 6 μm~19 μm, excellent performance welded joints can be obtained for combinations of steel sheets with different strength grades and different thickness specifications without pre-treatment such as stripping the pre-coating from the steel sheets.

Moreover, the aforementioned welding wire can have relatively low hardness, making it easy to draw and produce. Furthermore, harder welding wires can cause unstable wire feeding due to winding paths when passing through the wire feed conduit. A welding wire hardness below 300HV allows for relatively smooth wire feeding.

Additionally, when using this welding wire, the requirements for the butt gap between the steel sheets to be welded are not stringent. The gap range can be relaxed to within 0.5mm (uncontrollable gaps caused by cutting or other factors on the edges to be welded), which further helps improve efficiency and reduce costs. Simultaneously, this welding wire does not contain a large amount of expensive alloy elements, making it very low cost.

In the context of the present invention, "welding wire fill ratio" refers to the volume proportion of material from the welding wire in the formed weld seam, which is closely related to the gap between the welding surfaces of the materials during tailor welding.

As a preferred solution, the weld alloy composition required by the present invention can be achieved using the improved welding wire according to the present invention described above. In conjunction with the aforementioned improved welding wire, to conveniently obtain appropriate C and Mn content in the weld seam, the welding wire fill ratio can be 5~30%, preferably 10-25%.

It should be noted that although using the aforementioned welding wire composition and fill ratio is particularly advantageous and constitutes a preferred solution suggested by the present invention, the invention is not limited to using the welding wire composition and fill ratio suggested above. In fact, as long as the weld seam alloy composition formed after laser welding meets the conditions defined by the present invention, it is acceptable. Using other welding wire compositions or fill ratios might also achieve the weld alloy composition required by the present invention, thereby meeting the weld performance requirements.

Similarly, although the present invention is particularly suitable for use with steel sheets having a pre-coating thickness of 6 μm~19 μm, the invention is not limited to using steel sheets with such pre-coating thicknesses. For example, in cases where the pre-coating is thicker, the Al content in the weld seam can also be brought within the range required by the present invention by removing a small amount of aluminum from the pre-coating before welding.

The present invention also relates to a laser welding method for forming the aforementioned laser tailor-welded component, wherein, during laser welding, a welding wire comprising the following components by weight percentage is used: C: 0.30~0.45 wt.%, Mn: 1.0~3.0 wt.%; the welding wire fill ratio is 5-30%.

The present invention also provides an advantageous hot-stamped component, comprising:

a first coated steel sheet provided with a first coating;
a second coated steel sheet provided with a second coating; and
a weld seam connecting said first coated steel sheet to said second coated steel sheet,
wherein said weld seam has a weld evaluation factor $FA = 10Mn_{weld} + 77C_{weld} - 1900Al_{weid}^2 - 12Al_{weld}$, where $Mn_{weld}$, $C_{weld}$, $Al_{weld}$ are the manganese, carbon, and aluminum content in the weld seam by weight percentage, respectively, wherein the alloy composition of said weld seam and said weld evaluation factor FA satisfy the following conditions:

$$1.0 \text{wt.}\% \leqslant Mn_{weld} \leqslant 3.0 \text{wt.}\%,$$

$$0.3 \text{wt.}\% \leqslant Al_{weld} \leqslant 1.0 \text{wt.}\%,$$

and

(a) in the case of $0.27 \text{wt.}\% < C_{base} \leq 0.38 \text{wt.}\%$, satisfy:

$$0.32 \text{wt.}\% \leqslant C_{weld} \leqslant 0.4 \text{wt.}\%,$$

$$C_{base} + 0.01 \text{wt.}\% \leqslant C_{weld},$$

preferably, $C_{base} + 0.01 \text{wt.}\% \leq C_{weld} \leq C_{base} + 0.06 \text{wt.}\%$; and

$$10\% \leqslant FA \leqslant 32\%,$$

preferably $10\% \leq F \leq 30\%$;
(b) in the case of $0.15 \text{wt.}\% < C_{base} \leq 0.27 \text{wt.}\%$, satisfy:

$$0.19 \text{wt.}\% \leqslant C_{weld} \leqslant 0.32 \text{wt.}\%,$$

preferably $0.19 \text{wt.}\% \leq C_{weld} \leq 0.29 \text{wt.}\%,$

$$C_{base} + 0.01 \text{wt.}\% \leqslant C_{weld},$$

preferably, $C_{base} + 0.01 \text{wt.}\% \leq C_{weld} \leq Cbase + 0.11 \text{ wt.}\%$, more preferably, $C_{base} + 0.01 \text{wt.}\% \leq C_{weld} \leq Chase + 0.1 \text{wt.}\%$, and

$$10\% \leqslant FA \leqslant 30\%,$$

preferably $10\% \leq FA \leq 26\%$; or
(c) in the case of $0.05 \text{wt.}\% < C_{base} \leq 0.1 \text{wt.}\%$, satisfy:

$$0.05 \text{wt.}\% \leqslant C_{weld} \leqslant 0.32 \text{wt.}\%,$$

preferably $0.05 \text{wt.}\% \leq C_{weld} \leq 0.27 \text{wt.}\%$, $Chase + 0.01 \text{wt.}\% \leq C_{weld}$, preferably, $C_{base} + 0.01 \text{wt.}\% \leq C_{weld} \leq Cbase + 0.30 \text{wt.}\%$, and

$$10\% \leqslant FA \leqslant 25\%,$$

preferably $10\% \leq FA \leq 22\%$;

wherein, when the tensile strengths of said first coated steel sheet and said second coated steel sheet are different, $C_{base}$ represents the carbon content of the one with the relatively lower tensile strength among said first coated steel sheet and said second coated steel sheet; when the tensile strengths of said first coated steel sheet and said second coated steel sheet are the same, $C_{base}$ represents the carbon content of any one of said first coated steel sheet and said second coated steel sheet.

The first and second coatings on the first and second coated steel sheets of said hot-stamped component are formed by hot stamping the first and second pre-coatings composed of aluminum or aluminum alloy on the steel sheets, respectively. Preferably, the thickness of said first pre-coating and/or said second pre-coating is 6 μm~19 μm, preferably 8 μm~18 μm.

According to the present invention, the ferrite content in the weld seam of this hot-stamped component is not more than 5% by volume, preferably not more than 2%.

In this hot-stamped component, the hardness of the weld seam satisfies the following conditions:

(a) In the case where the tensile strength grades of said first coated steel sheet and said second coated steel sheet are the same, satisfy $HV_{wel} \geq HV_{base}$;
(b) In the case of $T_1 \times YS_1 \geq 0.9 \times T_2 \times YS_2$, satisfy $HV_{weld\ 0.2} \geq HV_{high\text{-strength base}}$;
(c) In the case of $T_1 \times YS_1 < 0.9 \times T_2 \times YS_2$, satisfy $HV_{weld} \geq HV_{low\text{-}}$strength base;

wherein, $YS_1$ is the yield strength of the one with the lower yield strength among said first coated steel sheet and said second coated steel sheet, $T_1$ is the thickness of the one with the lower yield strength among said first coated steel sheet and said second coated steel sheet, $YS_2$ is the yield strength of the one with the higher yield strength among said first coated steel sheet and said second coated steel sheet, $T_2$ is the thickness of the one with the higher yield strength among said first coated steel sheet and said second coated steel sheet, $HV_{base}$ is the hardness of said first coated steel sheet or said second coated steel sheet after hot stamping, $HV_{high\text{-strength base}}$ is the hardness of the one with the higher yield strength among said first coated steel sheet and said second coated steel sheet after hot stamping, $HV_{weld\ 0.2}$ is the hardness value within 0.2mm from the fusion line on the side of the one with the higher yield strength among said first coated steel sheet and said second coated steel sheet after hot stamping, $HV_{low\text{-strength base}}$ is the hardness of the one with the lower yield strength among said first coated steel sheet and said second coated steel sheet after hot stamping.

Preferably, the hot-stamped component of the present invention can be made by hot stamping the aforementioned laser tailor-welded component according to the present invention.

The present invention also relates to a method for producing a hot-stamped component, comprising the following steps:

A) Providing a laser tailor-welded component according to the present invention;
B) Complete austenitization treatment: heating the laser tailor-welded component from step A) to above 900° C and holding;
C) Hot stamping forming treatment: after completing step B), transferring the heated laser tailor-welded component to a press for hot deformation and cooling within the mold to below 300° C to obtain the hot-stamped component.

In some embodiments, the average cooling rate of said hot-stamped component from 700° C to the Ms temperature is not less than 40° C/s in areas where no hot deformation has occurred, and cooling is performed at a higher average cooling rate in areas where hot deformation has occurred.

Relying on the above novel concept, the present invention enables high-quality laser tailor welding of various combinations of hot-stamping steels with aluminum or aluminum alloy pre-coatings of multiple tensile strength grades and multiple thickness specifications. The present invention is well suited for various scenarios such as tailor welding of steel with equal strength, different strengths, equal thickness, and different thicknesses, obtaining high-quality weld seams with excellent strength and toughness and strong resistance to hydrogen-induced delayed cracking, overcoming the shortcomings of existing technologies that cannot accommodate multiple welding material combinations and cannot balance weld strength and toughness.

Furthermore, the solution of the present invention does not impose stringent requirements on the size of the weld butt gap and can be implemented without additional steps such as pre-stripping the pre-coating, enabling low-cost realization.

In addition, the welding wire composition proposed by the present invention does not need to contain a large amount of expensive alloy elements, making it very low cost.

Brief Description of the Drawings

Figure 1 schematically shows the location for measuring weld hardness;
Figure 2 schematically shows the measurement location for the hardness value $HV_{weld\ 0.2}$ within 0.2mm from the weld fusion line on the side of the base material with high yield strength.

Detailed Description

The main alloy components of the weld according to the present invention are described below in combination with exemplary embodiments.

C: The carbon content $C_{weld}$ in the weld is related to the carbon content or strength grade of the welded pre-coated steel sheet:

(a) In the case where the carbon content $C_{base}$ of the one with the relatively lower tensile strength among the first and second pre-coated steel sheets (if the tensile strengths are the same, then it refers to either one of them) conforms to 0.27wt.% < $C_{base}$≤0.38wt.%, it is necessary to satisfy 0.32wt.%≤$C_{weld}$≤0.4wt.%, and $C_{base}$+0.01wt.%≤$C_{weld}$, preferably, $C_{base}$ + 0.01wt.%≤$C_{weld}$≤$C_{pase}$+ 0.06wt.%;
(b) In the case where the carbon content $C_{base}$ of the one with the relatively lower tensile strength among the first and second pre-coated steel sheets (if the tensile strengths are the same, then it refers to either one of them) conforms to 0.15wt.% < $C_{base}$≤0.27wt.%, it is necessary to satisfy 0.19wt.% ≤ $C_{weld}$ ≤ 0.32 wt.%, and $C_{base}$+0.01wt.% ≤ $C_{weld}$, preferably, $C_{base}$+0.01wt.%≤$C_{weld}$≤$C_{base}$+ 0.11 wt. %, more preferably, $C_{base}$+0.01wt.% ≤$C_{weld}$≤ $C_{base}$+ 0.1wt.%;
(c) In the case where the carbon content $C_{base}$ of the one with the relatively lower tensile strength among the first and second pre-coated steel sheets (if the tensile strengths are the same, then it refers to either one of them) conforms to 0.05wt.%<$C_{base}$≤ 0.15wt.%, it is necessary to satisfy 0.05wt.% ≤ $C_{weld}$ ≤ 0.32wt.%, and $C_{base}$+0.01wt.% ≤ $C_{weld}$, preferably, $C_{base}$+0.01wt.%≤$C_{weld}$≤$C_{base}$+0.30wt.%.

C is an effective solid solution strengthening element. To ensure the weld seam has sufficient tensile strength, the carbon content must be guaranteed to be not less than about 0.05 wt.%. However, if the carbon content exceeds 0.4 wt.%, brittle twinned martensite will form, which has poor ductility and toughness, and significantly reduced resistance to hydrogen embrittlement. Therefore, for welding low-strength grade steel sheets, the carbon content in the weld of the present invention is not less than 0.05 wt.%; for welding high-strength grade steel sheets, the carbon content in the weld of the present invention is not higher than 0.4 wt.%.

For cases where the one with the relatively lower tensile strength among the two pre-coated steel sheets belongs to the 2000MPa, 1500MPa, or 1000MPa grade, respectively, it is necessary to satisfy $C_{base}$+0.01wt.% ≤$C_{weld}$, ensuring the weld strength is slightly greater than the base material, achieving weld "micro-strengthening". Preferably, to further ensure weld toughness, the extreme values of the difference between the weld carbon content $C_{weld}$ and the base material carbon content $C_{base}$ are obtained for various situations. For example, for the case of tailor welding 2000MPa grade steel with 2000MPa grade steel, there is $C_{weld}$≤$C_{base}$+ 0.06wt.%.

Mn: about 1.0~3.0wt.%, preferably 1.0~2.5wt.%.

Mn can improve the hardenability of steel to ensure the strength of the weld seam. To ensure the weld seam has good hardenability, the Mn content should not be lower than 1.0wt.%. On the other hand, when the Mn content in the weld seam exceeds 3.0wt.%, Mn segregation tends to occur in the weld seam, affecting weld performance. Moreover, an increase in Mn content tends to lead to reduced plasticity and toughness and increased brittleness of the martensite formed in the weld seam after hot stamping, increasing the risk of hydrogen-induced delayed cracking in the weld seam. Therefore, the Mn content in the weld seam should not be too high, should not exceed 3.0wt.%, and preferably should not exceed 2.5wt.%.

Al: about 0.3~1.0wt.%, preferably 0.4~0.8wt.%.

Aluminum is a ferrite-stabilizing element. If too much Al exists in the weld seam, it can prevent the weld seam from fully forming martensite after hot stamping. Research has found that when the Al content in the weld seam exceeds 1.0wt.%, it tends to form intermetallic compound regions with high brittleness, thereby inducing cracks and affecting weld strength. Therefore, the Al content in the weld seam should not be too high; according to the present invention, it should not exceed 1.0wt.%. Preferably, the Al content in the weld seam does not exceed 0.8wt.%, to avoid local formation of ferrite in the weld seam. The strength difference between ferrite and martensite can easily cause stress concentration and subsequently induce cracks. On the other hand, the inventors of the present invention found that if an appropriate amount of Al exists in the weld seam, it can have a toughening effect on the weld and enhance the weld's resistance to hydrogen-induced delayed cracking. Therefore, to obtain good resistance to hydrogen-induced delayed cracking, according to the present invention, the Al content in the weld seam should not be lower than 0.3wt.%, preferably not lower than 0.4wt.%.

In addition to the above components, as is well known to those skilled in the art, the weld seam is formed by melting the base material and the welding wire material, and it also contains the corresponding components from the base material and the welding wire.

Furthermore, to judge whether the performance of the weld seam meets the requirements, especially the resistance to hydrogen-induced delayed cracking, the present invention proposes calculating the weld evaluation factor FA to assist in determining whether the weld alloy composition is conducive to achieving excellent weld performance: $FA=10Mn_{weld}+77C_{weld}-1900Al_{weld}^2-12Al_{weld}$, where $Mn_{weld}$, $C_{weld}$, $Al_{weld}$ are the manganese, carbon, and aluminum content in the weld seam by weight percentage, respectively.

To obtain good weld performance, on the basis that the manganese, carbon, and aluminum content in the weld seam need to fall within the specific ranges given above, FA also needs to fall within the corresponding range. The required FA value range is related to the carbon content of the welded steel sheet. The present invention requires it to satisfy the following conditions:

For the three scenarios (a), (b), and (c) mentioned above, the weld evaluation factor FA must be no less than 10%. This is because, according to the FA calculation formula, the FA value decreases as the Al content increases. When the aluminum content increases, the complete austenitization temperature of the weld seam rises. Using the existing hot stamping heating process, the weld seam in the resulting hot-stamped component is prone to form ferrite, leading to a dual-phase microstructure of martensite and ferrite in the weld, which can cause the weld to fracture easily during tensile testing. The inventors have found through research that when FA ≥ 10%, the probability of ferrite formation in the weld under the existing hot stamping process is extremely low, thereby better ensuring the strength of the weld. On the other hand, the upper limit of the FA value is related to the weld's resistance to hydrogen-induced delayed cracking-the lower the FA value, the lower the risk of hydrogen-induced delayed cracking in the weld. The inventors' research shows that for scenario (a), when the weld's FA ≤ 32%, the risk of hydrogen-induced delayed cracking is extremely low, and FA ≤ 30% is further preferred; for scenario (b), when the weld's FA≤30%, the risk is extremely low, and FA≤26% is further preferred; for scenario (c), when the weld's FA≤25%, the risk is extremely low, and FA≤22% is further preferred.

If the percentage signs are removed from the content of each element for calculation, an evaluation factor FB can be used instead of FA for judgment, as both serve the same purpose: $FB=10Mn+77C-19Al^2-12Al$, where Mn, C, and Al represent the content of each element in the weld seam without the percentage sign. According to the present invention, the following conditions must be met:

(a) In the case where $0.27wt.\%<C_{base}\leq0.38wt.\%$, it is required that $10 \leq FB\leq32$, and preferably $10\leq FB\leq30$;
(b) In the case where $0.15wt.\%<C_{base}\leq0.27wt.\%$, it is required that $10 \leq FB\leq30$, and preferably $10\leq FB\leq26$;
(c) In the case where $0.05wt.\%<C_{base}\leq0.15wt.\%$, it is required that $10 \leq FB\leq25$, and preferably $10\leq FB\leq22$.

To simplify the process, the present invention proposes that setting the thickness of the aluminum or aluminum alloy pre-coating to 6 μm~ 19 μm is particularly advantageous. Selecting this pre-coating thickness makes it easier to achieve the appropriate Al content in the weld seam as required by the present invention without additional operations such as stripping the pre-coating before welding.

The following will describe the present invention in more detail with reference to exemplary embodiments. The following examples or experimental data are intended to illustratively explain the present invention, and those skilled in the art should understand that the present invention is not limited to these examples or experimental data.

As an example, commonly available hot-stamping steel sheets with aluminum-silicon pre-coatings in the 1000MPa - 2000MPa grade range are provided, and their compositions are shown in Table 1.

Table 1 Composition of Steel with Al-Si Pre-coating (wt.%)

| Material Code | C | Mn | Si | Cr | V | B | Al | Ti | Nb |
|---|---|---|---|---|---|---|---|---|---|
| T1 | 0.07 | 1.9 | 0.15 | 0.2 | - | 0.003 | 0.035 | 0.03 | 0.03 |
| T2 | 0.21 | 1.18 | 0.22 | 0.16 | - | 0.0025 | 0.034 | 0.04 | - |
| T3 | 0.30 | 1.2 | 0.27 | 0.2 | 0.14 | 0.003 | 0.030 | - | 0.03 |
| T4 | 0.36 | 1.1 | 0.25 | 0.2 | 0.15 | 0.003 | 0.025 | - | 0.03 |

The remainder is Fe and other unavoidable impurity elements.

According to the ASTM E8/E8M-09 Standard Test Methods for Tension Testing of Metallic Materials, A50 tensile specimens were machined from the hot-stamped components made from the aforementioned materials. The mechanical properties obtained from the tensile tests are shown in Table 2.

Table 2 Mechanical Properties of Steel with Al-Si Pre-coating After Hot Stamping

| Material Code | Yield Strength/MPa | Tensile Strength/MPa | Hardness/HV$_{base}$ | Tensile Strength Grade |
|---|---|---|---|---|
| T1 | 920 | 1151 | 392 | 1000MPa grade |
| T2 | 1192 | 1517 | 482 | 1500MPa grade |
| T3 | 1350 | 1860 | 585 | 2000MPa grade |
| T4 | 1400 | 1930 | 615 | 2000MPa grade |

Welding wires with a diameter of 1.0 mm were provided, having different compositions as shown in Table 3. Among them, W1, W2, and W5 are universal welding wires according to the present invention, suitable for welding steel sheets of various strengths and thicknesses. The compositions of welding wires W3 and W4 fall outside the scope of this patent and serve as comparative examples.

Table 3 Composition of Experimental Welding Wires (wt.%)

| Wire Code | C | Mn | Si | Al | Ti |
|---|---|---|---|---|---|
| W1 | 0.31 | 2.5 | 0.20 | 0.034 | 0.04 |
| W2 | 0.40 | 2.0 | 0.18 | 0.035 | 0.03 |
| W3 | 0.49 | 3.3 | 0.17 | 0.031 | 0.03 |
| W4 | 0.24 | 1.8 | 0.22 | 0.031 | 0.03 |
| W5 | 0.45 | 1.2 | 0.18 | 0.029 | 0.02 |

Various strength grades and thicknesses of the aforementioned steel materials were selected and combined with different welding wire compositions and filler amounts to form various laser wire-fill welding combinations, as detailed in Table 4. Prior to laser wire-fill welding, no operations such as pre-coating stripping were performed. The pre-coating thickness was determined by measuring the thickness at three locations under metallographic examination and taking the average value.

The welding wire filler amount is calculated based on the butt gap between the steel sheets to be welded and the weld seam width through the following method: A certain gap (e.g., 0 - 0.5 mm) is preset in the middle of the butt joint of the plates to be welded using a feeler gauge. After laser tailor welding, the widths of the upper and lower surfaces of the weld seam are measured and averaged. The preset gap is divided by the average width of the weld seam to obtain an estimated value of the welding wire filler amount.

Table 4 Combination of Experimental Steel Laser-Welded Blanks

| Weld ID | Material 1 | Thickness/ mm | Pre-coating Thickness/um | Material 2 | Thickness /mm | Pre-coating Thickness/um | Wire Feed Rate | Welding Wire |
|---|---|---|---|---|---|---|---|---|
| S1 | T1 | 1.4 | 8.4 | T1 | 1.4 | 7.8 | 5% | W1 |
| S2 | T1 | 1.4 | 11.3 | T1 | 1.4 | 10.3 | 5% | W2 |
| S3 | T1 | 1.4 | 12.1 | T1 | 1.4 | 11.5 | 25% | W1 |
| S4 | T1 | 1.4 | 8.9 | T1 | 1.4 | 7.7 | 25% | W2 |
| S5 | T1 | 1.4 | 6.9 | T1 | 1.4 | 7.4 | 35% | W1 |
| S6 | T1 | 1.4 | 8.1 | T1 | 1.4 | 8.6 | 35% | W2 |
| S7 | T1 | 1.4 | 12.4 | T1 | 1.4 | 11.3 | 25% | W3 |
| S8 | T2 | 1.4 | 14.1 | T2 | 1.4 | 13.5 | 5% | W1 |
| S9 | T2 | 1.4 | 20.0 | T2 | 1.4 | 18.9 | 5% | W2 |
| S10 | T2 | 1.4 | 12.1 | T2 | 1.4 | 13.0 | 25% | W1 |
| S11 | T2 | 1.4 | 12.4 | T2 | 1.4 | 11.5 | 25% | W2 |
| S12 | T2 | 1.4 | 5.2 | T2 | 1.4 | 5.8 | 35% | W1 |
| S13 | T2 | 1.4 | 7.8 | T2 | 1.4 | 7.2 | 35% | W2 |
| S14 | T2 | 1.4 | 11.3 | T2 | 1.4 | 10.1 | 25% | W3 |
| S15 | T3 | 1.4 | 6.3 | T3 | 1.4 | 7.2 | 3% | W1 |
| S16 | T3 | 1.4 | 11.2 | T3 | 1.4 | 10.1 | 5% | W1 |
| S17 | T3 | 1.4 | 14.2 | T3 | 1.4 | 12.5 | 5% | W2 |
| S18 | T3 | 1.4 | 17.5 | T3 | 1.4 | 17.8 | 25% | W1 |
| S19 | T3 | 1.4 | 17.4 | T3 | 1.4 | 17.7 | 25% | W2 |
| S20 | T3 | 1.4 | 19.7 | T3 | 1.4 | 18.4 | 25% | W2 |

(continued)

| Weld ID | Material 1 | Thickness/ mm | Pre- coating Thickne ss/um | Material 2 | Thickness /mm | Pre-coating Thickness/u m | Wire Feed Rate | Welding Wire |
|---|---|---|---|---|---|---|---|---|
| S21 | T3 | 1.4 | 7.8 | T3 | 1.4 | 8.4 | <u>35%</u> | W1 |
| S22 | T3 | 1.4 | 7.8 | T3 | 1.4 | 6.7 | 35% | W2 |
| S23 | T3 | 1.4 | 11.3 | T3 | 1.4 | 10.4 | 25% | <u>W3</u> |
| S24 | T3 | 1.4 | 16.9 | T3 | 1.4 | 15.8 | 25% | <u>W4</u> |
| S25 | T1 | 1.4 | 14.2 | T2 | 1.4 | 13.2 | 5% | W1 |
| S26 | T1 | 1.4 | 6.9 | T2 | 1.4 | 7.4 | 10% | W2 |
| S27 | T1 | 1.4 | 12.7 | T3 | 1.4 | 11.3 | 10% | W1 |
| S28 | T1 | 1.4 | 14.2 | T3 | 1.4 | 13.8 | 15% | W2 |
| S29 | T2 | 1.4 | 14.8 | T3 | 1.4 | 15.2 | 20% | W1 |
| S30 | T2 | 1.4 | 13.0 | T3 | 1.4 | 12.1 | 20% | W2 |
| S31 | T1 | 1.8 | 11.3 | T2 | 1.4 | 10.4 | 30% | W1 |
| S32 | T1 | 1.8 | 10.1 | T2 | 1.4 | 11.2 | 25% | W2 |
| S33 | T1 | 1.8 | 11.3 | T2 | 1.4 | 10.1 | 25% | <u>W3</u> |
| S34 | T1 | 1.8 | 6.3 | T2 | 1.4 | 8.0 | 30% | W4 |
| S35 | T2 | 1.7 | 13.9 | T3 | 1.4 | 11.3 | 25% | W1 |
| S36 | T2 | 1.7 | 17.1 | T3 | 1.4 | 15.6 | 25% | W2 |
| S37 | T2 | 1.7 | 9.5 | T3 | 1.4 | 8.7 | 25% | <u>W3</u> |
| S38 | T2 | 1.7 | 4.4 | T3 | 1.4 | 4.9 | 25% | <u>W4</u> |
| S39 | T3 | 1.5 | 10.8 | T3 | 1.5 | 10.7 | 5% | W1 |
| S40 | T3 | 1.5 | 15.5 | T3 | 1.5 | 14.8 | 30% | W5 |
| S41 | T3 | 1.5 | 13.5 | T3 | 1.5 | 14.1 | <u>35%</u> | W5 |
| S42 | T3 | 1.4 | 18.5 | T3 | 1.4 | 19.0 | 5% | W5 |
| S43 | T3 | 1.6 | 14.2 | T3 | 1.4 | 15.8 | 20% | W5 |
| S44 | T1 | 1.4 | 11.5 | T1 | 1.4 | 10.9 | 30% | W5 |
| S45 | T1 | 1.4 | 19.2 | T1 | 1.4 | 19.1 | 30% | W3 |
| S46 | T1 | 1.4 | 16.8 | T1 | 1.4 | 16.4 | 5% | W5 |
| S47 | T2 | 1.4 | 18.2 | T2 | 1.4 | 18.5 | 30% | W5 |
| S48 | T2 | 1.4 | 11.0 | T2 | 1.4 | 11.4 | 30% | W2 |
| S49 | T4 | 1.4 | 16.8 | T4 | 1.4 | 17.0 | <u>40%</u> | W5 |
| S50 | T4 | 1.4 | 16.5 | T4 | 1.4 | 15.9 | <u>45%</u> | W5 |

After completing the laser welding, the aforementioned laser-welded pre-coated steel sheets were subjected to hot stamping according to conventional hot stamping processes in the field. In this example, hot stamping simulation was performed on each of the aforementioned laser-welded pre-coated steel sheets. The hot stamping process parameters were as follows:

1) The laser-welded pre-coated steel sheet was heated to 900° C, held at this temperature for 300 seconds for austenitization, and then transferred to the press. Hot stamping was performed above 700 ° C under a pressure of 400 metric tons with a pressure holding time of 10 seconds. The part was cooled within the die to below 100° C before removal.

2) To simulate the actual service conditions of an automotive component, after the steel cooled to room temperature, it was placed in a 170° C tempering furnace and held for 20 minutes to simulate the paint baking process during assembly. Subsequently, it was removed from the furnace and air-cooled to room temperature to obtain the final hot-stamped component.

Table 5 shows the measured mechanical properties of the laser-welded blanks after hot stamping. Examples marked with underlinein the table are comparative examples that do not meet the requirements of the present invention. The measurement methods for each parameter/property are as follows:
The tensile properties were measured according to the ASTM E8/E8M-09 standard test methods for tension testing of metallic materials. Tensile specimens were machined from the hot-stamped components obtained from the laser-welded pre-coated steel sheets, with the weld seam located at the center of the specimen.

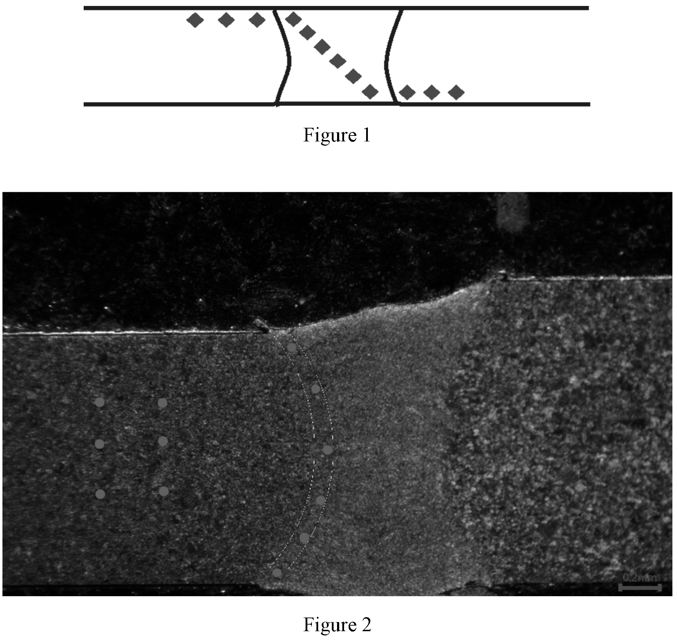

Weld hardness was tested in accordance with the GB/T 4342-1991 standard. The locations for hardness measurements are schematically shown in Figure 1. To measure the weld hardness $HV_{weld}$, at least six test points were taken along the diagonal of the weld seam, and the average value was calculated. To measure the base material hardness, at least three test points were taken outside the weld seam, and the average value was calculated. Additionally, the measurement location for the hardness value $HV_{weld0.2}$ within 0.2 mm from the fusion line on the side of the base material with higher yield strength is schematically shown in Figure 2. Specifically, 3 - 6 hardness test points were taken within 0.2 mm from the weld edge, and the average value was calculated.

The evaluation of hydrogen-induced delayed cracking was conducted as follows:Samples of 15 × 115mm were taken from the hot-stamped flat sheets according to GB/T 15970.2-2000, with the weld seam positioned at the center of the sample and perpendicular to the length direction. The stress value applied (based on the yield strength of the low-carbon-content base material) was converted to deflection according to ISO 7539-2:1989.
The deflected samples were placed in an environment with pH = 1, and the pH value was calibrated every 24 hours until the sample fractured. The fracture location was recorded.

The composition at the weld location was measured as follows:
The cross-section of the weld seam of the laser-welded blank or the laser-welded hot-formed component was cut, ensuring the sampling area entirely covered the weld region. The length of the sampled weld was ≥2 mm.Samples were taken from at least three different locations along the same weld seam. The C, Mn, and Al contents in the sampled weld were detected using wet chemical analysis.

Table 5 Performance Measurement Results After Hot Stamping

| Weld ID | Weld Composition | | | $HV_{base}$ / $HV_{low-strength\ base}$ | $HV_{high\ -strength\ base}$ | $HV_{weld}$ | $HV_{weld0.2}$ | Tensile Properties | | FA/% | Delayed Cracking Fracture Location |
|---|---|---|---|---|---|---|---|---|---|---|---|
| | C | Mn | Al | | | | | Fracture Location | Tensile Strength/ MPa | | |
| S1 | 0.09 | 1.78 | 0.31 | 390 | / | 403 | / | Base MaterialT 1 | 1167 | 19.1841 | Base Material T1 |
| S2 | 0.10 | 1.73 | 0.39 | 394 | / | 415 | / | Base MaterialT 1 | 1065 | 17.4301 | Base Material T1 |
| S3 | 0.13 | 1.90 | 0.42 | 389 | / | 425 | / | Base MaterialT 1 | 1171 | 20.6184 | Base Material T1 |
| S4 | 0.15 | 1.77 | 0.31 | 395 | / | 448 | / | Base MaterialT 1 | 1084 | 23.7041 | Base Material T1 |
| S5 | 0.15 | 1.98 | 0.24 | 403 | / | 451 | / | Base MaterialT 1 | 1078 | 27.3756 | Weld seam |
| S6 | 0.17 | 1.81 | 0.28 | 399 | / | 460 | / | Base MaterialT 1 | 1123 | 26.3404 | Weld seam |
| S7 | 0.21 | 2.30 | 0.43 | 403 | / | 478 | / | Base MaterialT 1 | 1145 | 30.4969 | Weld seam |
| S8 | 0.23 | 1.46 | 0.52 | 482 | / | 497 | / | Base MaterialT 2 | 1533 | 20.9324 | Base Material T2 |
| S9 | 0.23 | 1.22 | 1.03 | 479 | / | 433 | / | Weld seam | 1145 | -2.6071 | / |
| S10 | 0.25 | 1.51 | 0.42 | 489 | / | 522 | / | Base MaterialT 2 | 1457 | 25.9584 | Base Material T2 |
| S11 | 0.27 | 1.38 | 0.43 | 482 | / | 526 | / | Base MaterialT 2 | 1554 | 25.9169 | Base Material T2 |
| S12 | 0.26 | 1.54 | 0.18 | 492 | / | 529 | / | Base MaterialT 2 | 1489 | 32.6444 | Weld seam |
| S13 | 0.29 | 1.46 | 0.27 | 487 | / | 574 | / | Base MaterialT 2 | 1544 | 32.3049 | Weld seam |
| S14 | 0.29 | 1.71 | 0.39 | 490 | / | 569 | / | Base MaterialT 2 | 1489 | 31.8601 | Weld seam |
| S15 | 0.30 | 1.12 | 0.22 | 580 | / | 572 | / | Weld seam | 1733 | 30.7404 | / |
| S16 | 0.32 | 1.26 | 0.39 | 576 | / | 584 | / | Base MaterialT 3 | 1828 | 29.6701 | Base Material T3 |
| S17 | 0.33 | 1.24 | 0.49 | 580 | / | 597 | / | Base MaterialT 3 | 1865 | 27.3681 | Base Material T3 |
| S18 | 0.32 | 1.32 | 0.81 | 584 | / | 609 | / | Base MaterialT 3 | 1843 | 15.6541 | Base Material T3 |
| S19 | 0.33 | 1.50 | 0.72 | 586 | / | 615 | / | Base MaterialT 3 | 1902 | 21.9204 | Base Material T3 |
| S20 | 0.33 | 1.56 | 1.02 | 584 | / | 566 | / | Weld seam | 1740 | 9.0024 | / |
| S21 | 0.31 | 1.65 | 0.27 | 585 | / | 622 | / | Base MaterialT 3 | 1856 | 35.7449 | Weld seam |
| S22 | 0.34 | 1.58 | 0.27 | 588 | / | 637 | / | Base MaterialT 3 | 1878 | 37.3549 | Weld seam |
| S23 | 0.35 | 1.72 | 0.39 | 587 | / | 622 | / | Base MaterialT 3 | 1895 | 36.5801 | Weld seam |
| S24 | 0.29 | 2.35 | 0.72 | 581 | / | 558 | / | Weld seam | 1489 | 27.3404 | / |
| S25 | 0.16 | 1.50 | 0.49 | 396 | 486 | 445 | / | Base MaterialT 1 | 1093 | 16.8781 | Base Material T1 |

| Weld ID | Weld Composition | | | HV$_{base}$ / HV$_{low-strength\ base}$ | HV$_{high\ -strength\ base}$ | HV$_{weld}$ | HV$_{weld0.2}$ | Tensile Properties | | FA/% | Delayed Cracking Fracture Location |
|---|---|---|---|---|---|---|---|---|---|---|---|
| | C | Mn | Al | | | | | Fracture Location | Tensile Strength/ MPa | | |
| S26 | 0.17 | 1.55 | 0.30 | 390 | 480 | 439 | / | Base MaterialT 1 | 1078 | 23.28 | Base Material T1 |
| S27 | 0.21 | 1.61 | 0.44 | 394 | 576 | 488 | / | Base MaterialT 1 | 1065 | 23.3116 | Base Material T1 |
| S28 | 0.23 | 1.70 | 0.49 | 403 | 584 | 494 | / | Base MaterialT 1 | 1123 | 24.2681 | Base Material T1 |
| S29 | 0.26 | 1.33 | 0.51 | 480 | 578 | 558 | / | Base MaterialT 2 | 1427 | 22.2581 | Base Material T2 |
| S30 | 0.28 | 1.48 | 0.45 | 488 | 586 | 550 | / | Base MaterialT 2 | 1499 | 27.1125 | Base Material T2 |
| S31 | 0.22 | 1.20 | 0.39 | 389 | 476 | 517 | 512 | Base MaterialT 2 | 1496 | 21.3701 | Base Material T1 |
| S32 | 0.21 | 1.45 | 0.35 | 395 | 485 | 502 | 508 | Base MaterialT 2 | 1507 | 24.1425 | Base Material T1 |
| S33 | 0.23 | 1.72 | 0.39 | 390 | 479 | 484 | 517 | Base MaterialT 2 | 1533 | 27.3401 | Weld seam |
| S34 | 0.17 | 1.38 | 0.22 | 399 | 488 | 478 | 440 | Weld seam | / | 23.3304 | / |
| S35 | 0.30 | 1.59 | 0.48 | 479 | 587 | 595 | 590 | Base MaterialT 3 | 1898 | 28.8624 | Base Material T2 |
| S36 | 0.32 | 1.40 | 0.59 | 490 | 574 | 603 | 587 | Base MaterialT 3 | 1854 | 24.9461 | Base Material T2 |
| S32 | 0.34 | 1.42 | 0.33 | 489 | 583 | 598 | 613 | Base MaterialT 3 | 1867 | 34.3509 | Weld seam |
| S38 | 0.26 | 1.38 | 0.12 | 477 | 579 | 546 | 537 | Weld seam | / | 32.1064 | / |
| S39 | 0.32 | 1.35 | 0.35 | 575 | / | 580 | / | Base MaterialT 3 | 1843 | 31.6125 | Base Material T3 |
| S40 | 0.36 | 1.20 | 0.52 | 583 | / | 628 | / | Base MaterialT 3 | 1852 | 28.3424 | Base Material T3 |
| S41 | 0.37 | 1.20 | 0.39 | 574 | / | 624 | / | Base MaterialT 3 | 1846 | 32.9201 | Weld seam |
| S42 | 0.32 | 1.20 | 0.89 | 578 | / | 580 | / | Base MaterialT 3 | 1852 | 10.9101 | Base Material T3 |
| S43 | 0.34 | 1.20 | 0.44 | 586 | / | 604 | / | Base MaterialT 3 | 1875 | 29.2216 | Base Material T3 |
| S44 | 0.18 | 1.70 | 0.33 | 385 | / | 472 | / | Base MaterialT 1 | 1140 | 24.8309 | Base Material T1 |
| S45 | 0.22 | 2.40 | 1.01 | 392 | / | 373 | / | Weld seam | 980 | 9.4381 | / |
| S46 | 0.09 | 1.85 | 0.63 | 382 | / | 390 | / | Base MaterialT 1 | 1085 | 10.3289 | Base Material T1 |
| S47 | 0.29 | 1.22 | 0.85 | 483 | / | 536 | / | Base MaterialT 2 | 1485 | 10.6025 | Base Material T2 |
| S48 | 0.28 | 1.44 | 0.35 | 485 | / | 543 | / | Base MaterialT 2 | 1504 | 29.4325 | Base Material T2 |
| S49 | 0.41 | 1.21 | 0.45 | 580 | / | 634 | / | Base MaterialT 3 | 1950 | 34.4225 | Weld seam |
| S50 | 0.42 | 1.24 | 0.38 | 586 | / | 638 | / | Base MaterialT 3 | 1942 | 37.4364 | Weld seam |

As shown in Table 4, weld seams S1-S50 were formed by welding combinations of steel sheets with various strength grades (1000MPa, 1500MPa, and 2000MPa) and thicknesses, using welding wires with compositions designated as W1-W5. The welding wire filler amount was estimated based on the preset butt gap during welding. After hot stamping and tempering the laser-welded components, their mechanical properties, weld composition, and resistance to hydrogen-induced delayed cracking were evaluated. Referring to Table 5, the measurement results are analyzed as follows.

S1-S4, S44, S46 involved butt welding of 1000MPa grade material with itself, using three different welding wires (W1, W2, W5) and three different filler amounts (5%, 25%, 30%). Regarding weld composition, since the wire composition, filler amount, and steel sheet pre-coating thickness for S1-S4, S44, S46 all fell within the ranges suggested by the present invention, the resulting weld alloy compositions met the invention's requirements, despite slight variations in specific parameters. The measured C content in welds S1-S4, S44, S46 ranged from 0.09-0.18 wt.%, Mn content from 1.70-1.90 wt.%, and Al content from 0.31-0.63 wt.%. Substitution into the FA or FB formulas showed that all satisfied the invention's requirement of 10%≤FA ≤25% or 10≤FB≤25.

In terms of weld performance, hardness measurements showed that the weld hardness exceeded that of the T1 base material. Static tensile tests showed that specimens fractured in the T1 base material. Furthermore, observation of hydrogen-induced delayed cracking revealed that specimens S1-S4, S44, S46 all cracked first in the T1 base material. Therefore, the weld performance of S1-S4, S44, S46 meets the requirements.

S5-S7 also involved butt welding of 1000MPa grade material with itself. However, S5 and S6 used a larger welding wire filler amount (35%) outside the invention's recommended range, while S7 and S45 used the comparative welding wire W3, whose composition falls outside the invention's scope.

From S5 and S6, it can be seen that when using W1 and W2 wires with the filler amount increased to 35%, the C and Mn content in the weld increased, leading to a rise in weld hardness and strength. The average weld hardness reached 451HV and 460HV, far exceeding the average base material hardness. Consequently, the weld strength was greater than the base material strength, so specimens fractured in the T1 base material during static tensile testing. Despite excellent strength, the resistance to hydrogen-induced delayed cracking for S5 and S6 welds was poor, with cracking occurring in the weld. This is because the Al content in the weld was relatively low; calculation shows FA>25% (FB>25), which does not comply with the invention's requirements. In other words, the Al content in S5 and S6 welds was insufficient to properly balance with the C and Mn, preventing Al from fully exerting its effect of improving weld toughness and resistance to hydrogen-induced cracking.

S7 used the comparative wire W3, which has high C and Mn content. Even with a 25% filler amount, the weld acquired relatively high C and Mn content, which was not well balanced with its Al content. Thus, although the hardness and strength of weld S7 were greater than those of the T1 base material, its resistance to hydrogen-induced delayed cracking was poor, with cracking occurring in the weld. Calculation shows FA=30.4969%, which does not meet the invention's requirement of 10%≤FA≤25%.

S45 used a pre-coating thickness exceeding 19μm without prior stripping, resulting in excessively high Al content in the weld. The weld fractured during tensile testing due to insufficient strength. Simultaneously, calculation shows FA<10%, indicating that the C and Mn content in the weld failed to achieve a good balance with the Al content.

S8-S11, S47, S48 involved butt welding of 1500MPa grade material with itself, using three different welding wires (W1, W2, W5) and three different filler amounts (5%, 25%, 30%).

Regarding weld composition, since the wire composition, filler amount, and steel sheet pre-coating thickness for S8, S10, S11, S47, S48 all fell within the ranges suggested by the present invention, the resulting weld alloy compositions met the invention's requirements. The measured C content ranged from 0.23-0.29wt.%, Mn content from 1.22-1.51wt.%, and Al content from 0.35-0.85wt.%. Calculation of the evaluation factor FA showed that all satisfied the invention's requirement of 10%≤FA≤30% (10 ≤FB≤30).

In contrast, S9, although using wire W2 and a 5% filler amount, had an excessively thick pre-coating, leading to an Al content in the weld as high as 1.03 wt.%, which does not meet the invention's requirements. The calculated FA value is -2.6071%, also failing to meet the requirements.

In terms of weld performance, hardness measurements showed that the weld hardness for S8, S10, S11, S47, S48 exceeded that of the T2 base material. Static tensile tests showed that specimens fractured in the T2 base material. Furthermore, observation of hydrogen-induced delayed cracking revealed that these specimens all cracked first in the T2 base material. Therefore, the weld performance of S8, S10, S11, S47, S48 meets the requirements.

In contrast, the excessively high Al content in S9 led to the presence of ferrite in the weld after hot stamping, reducing weld strength and hardness. The specimen fractured in the weld during static tensile testing, failing to meet weld performance requirements, making further evaluation for hydrogen-induced delayed cracking unnecessary.

S12-S14 also involved butt welding of 1500MPa grade material with itself. However, S12 and S13 used a larger welding wire filler amount outside the recommended range, and S14 used the comparative welding wire W3.

From S12 and S13, it is evident that increasing the filler amount to 35% with W1 and W2 wires increased the C and Mn content in the weld, consequently increasing weld hardness and strength. The average weld hardness reached 529HV and 574HV, significantly higher than the average base material hardness. The weld strength exceeded the base material strength, so specimens fractured in the T2 base material during static tensile testing. Despite excellent strength, the resistance to hydrogen-induced delayed cracking for S12 and S13 welds was poor, with cracking occurring in the weld. This is due to the relatively low Al content; calculation shows FA>30%, not complying with the invention's requirements. The Al content was insufficient to balance the C and Mn.

S14 used the comparative wire W3, which has high C and Mn content. Even with a 25% filler amount, the weld acquired high C and Mn content. Thus, although the hardness and strength of weld S14 were greater than those of the T2 base material, its resistance to hydrogen-induced delayed cracking was poor, with cracking occurring in the weld. Calculation shows FA=31.8601%, which does not meet the requirement of 10%≤FA≤30%.

S16-S19, S40, S42, S43 involved butt welding of 2000MPa grade material with itself, using three different welding wires (W1, W2, W5) and different filler amounts (5%,20%,25%,30%). Regarding weld composition, since the wire composition, filler amount, and steel sheet pre-coating thickness for these welds all fell within the ranges suggested by the invention, the resulting weld alloy compositions met the requirements. The measured C content ranged from 0.32-0.36wt.%, Mn content from 1.20-1.32wt.%, and Al content from 0.39-0.89wt.%. Substitution into the FA or FB formulas showed that all satisfied the invention's requirement of 10%≤ FA≤32% or 10≤FB≤32.

In terms of weld performance, hardness measurements showed that the weld hardness exceeded that of the T3 base material. Static tensile tests showed that specimens fractured in the T3 base material. Furthermore, observation of hydrogen-induced delayed cracking revealed that these specimens all cracked first in the T3 base material. Therefore, the weld performance of S16-S19, S40, S42, S43 meets the requirements.

S15, S20-S24, S41, S49-S50 also involved butt welding of 2000MPa grade material with itself. However, S15 used a smaller filler amount outside the recommended range, S20 used a pre-coating thickness outside the recommended range, S21, S22, S41, S49, S50 used larger filler amounts outside the recommended range, and S23, S24 used the comparative welding wires W3, W4 whose compositions fall outside the invention's scope.

For S15, the welding wire filler amount was too low, resulting in no significant increase in C content in the weld (only 0.30wt.%), which does not meet the requirements. This led to weld hardness being slightly lower than the base material, meaning the weld was not strengthened by the wire addition. The specimen fractured in the weld during static tensile testing.

For S20, the pre-coating thickness was too large, leading to an Al content in the weld as high as 1.02wt.%, which does not meet the requirements. The calculated FA value is 9.0024%, also failing to meet the requirement of 10%≤FA≤32%. The excessively high Al content resulted in ferrite formation in the weld after hot stamping, reducing weld strength and hardness. The specimen fractured in the weld during static tensile testing, failing to meet performance requirements.

From S21, S22, and S41, it can be seen that increasing the filler amount to 35% with W1, W2, and W5 wires increased the C and Mn content in the weld, consequently increasing weld hardness and strength. The average weld hardness reached 622HV, 637HV, and 624HV, significantly higher than the average base material hardness. The weld strength exceeded the base material strength, so specimens fractured in the T3 base material during static tensile testing. Despite excellent strength, the resistance to hydrogen-induced delayed cracking for these welds was poor, with cracking occurring in the weld. This is due to the relatively low Al content; calculation shows FA>32%, not complying with the requirements.

From S49 and S50, using T4 base material, W5 wire, and a filler amount of 40-45%, the C content in the weld increased to above 0.4 wt.%. This increase effectively enhanced weld strength, leading to fracture in the T4 base material during static tensile testing. However, since the weld C content exceeded 0.4 wt.%, which violates the invention's requirement, the resistance to hydrogen-induced delayed cracking was poor, with cracking occurring in the weld.

S23 used the comparative wire W3, which has high C and Mn content. Even with a 25% filler amount, the weld acquired high C and Mn content. Thus, although the hardness and strength of weld S23 were greater than those of the T3 base material, its resistance to hydrogen-induced delayed cracking was poor, with cracking occurring in the weld. Calculation shows FA = 36.5801%, which does not meet the requirement of 10%≤FA≤32%.

S24 used the comparative wire W4, which has low C and Mn content, easily leading to insufficient weld strengthening and thus failing to meet hardness standards. The specimen fractured in the weld during static tensile testing.

S25-S30 involved welding steel sheets of equal thickness but different strength grades, using the invention's recommended wires W1 and W2 and recommended filler amounts. The resulting weld alloy compositions met the invention's requirements. As seen in Table 5, for various combinations, static tensile tests, hardness tests, and hydrogen-induced delayed cracking tests all showed that the weld performance met the requirements.

S31-S34 involved welding steel sheets of different thicknesses and strength grades, specifically 1.8mm thick 1000MPa grade material T1 with 1.4mm thick 1500MPa grade material T2. From Table 2, the yield strength of T1 is 920MPa and T2 is 1192MPa. Calculation shows that the two steel sheets to be welded satisfy: $T_1 \times YS_1 \geq 0.9 \times T_2 \times YS_2$, where $YS_1$ and $T_1$ are the yield strength and thickness of the 1.8mm $T_1$ material, and $YS_2$ and $T_2$ are the yield strength and thickness of the 1.4mm $T_2$ material.

S31 and S32 used the invention's recommended wire composition, filler amount, and pre-coating thickness, achieving the required alloy composition. Accordingly, hardness tests for S31 and S32 showed that $HV_{weld0.2}$ was greater than the 1500MPa base material hardness. In static tensile tests, specimens fractured in the T2 base material. Observation of hydrogen-induced delayed cracking showed cracking occurred in the base material. Therefore, the weld performance of S31 and S32 meets the requirements.

S33 and S34 used the comparative wires W3 and W4, whose compositions fall outside the invention's scope. For S33, although its hardness and strength could meet the demand, the calculated FA value was 27.3401%, which does not meet the requirement of $10\% \leq FA \leq 25\%$. Observation showed cracking occurred in the weld. S34 used the comparative wire W4, which has low C and Mn content, easily leading to insufficient weld strengthening. Even with a larger filler amount, $HV_{weld0.2}$ was only 440 HV, failing to meet the requirement of being greater than the T2 base material hardness. The specimen fractured in the weld during static tensile testing, failing to meet performance requirements.

S35-S38 involved welding steel sheets of different thicknesses and strength grades, specifically 1.7mm thick 1500MPa material T2 with 1.4mm thick 2000MPa material T3. From Table 2, the yield strength of T2 is 1192 MPa and T3 is 1350 MPa. Calculation shows that the two steel sheets to be welded satisfy: $T_1 \times YS_1 \geq 0.9 \times T_2 \times YS_2$ (Note: presumably T1/YS1 refer to T2 properties, T2/YS2 refer to T3 properties here).

S35 and S36 used the invention's recommended wire composition, filler amount, and pre-coating thickness, achieving the required alloy composition. Accordingly, hardness tests showed that $HV_{weld0.2}$ was greater than the T3 base material hardness. In static tensile tests, specimens fractured in the T3 base material. Observation of hydrogen-induced delayed cracking showed cracking occurred in the base material. Therefore, the weld performance of S35 and S36 meets the requirements.

S37 and S38 used the comparative wires W3 and W4. For S37, although its hardness and strength could meet the demand, the calculated FA value was 34.3509%, which does not meet the requirement of $10\% \leq FA \leq 30\%$. Observation showed cracking occurred in the weld. S38 used the comparative wire W4, which has low C and Mn content, easily leading to insufficient weld strengthening. Hardness tests showed that $HV_{weld0.2}$ was only 537 HV, failing to meet the requirement of being greater than the T3 base material hardness. The specimen fractured in the weld during static tensile testing, failing to meet performance requirements.

In conclusion, utilizing the weld alloy composition of the present invention, reliable welds with excellent strength, toughness, and resistance to hydrogen-induced cracking can be achieved for various scenarios: welding steel of the same strength, different strengths, same thickness, or different thicknesses. Furthermore, the solution proposed by the present invention can be realized at low cost.

The above embodiments and experimental data are intended to illustratively explain the present invention. Those skilled in the art should understand that the invention is not limited to these examples, and various modifications can be made without departing from the scope of the invention.

**Claims**

1. A hot-stamped component, comprising:

    a first coated steel sheet provided with a first coating;
    a second coated steel sheet provided with a second coating; and
    a weld seam connecting said first coated steel sheet to said second coated steel sheet,
    wherein said weld seam has a weld evaluation factor $FA=10Mn_{weld}+77C_{weld}-1900Al_{weld}^2-12Al_{weld}$, wherein $Mn_{weld}$, $C_{weld}$, $Al_{weld}$ are the manganese, carbon, and aluminum content in the weld seam by weight percentage, respectively,
    wherein the alloy composition of said weld seam and said weld evaluation factor FA satisfy the following conditions:

$$1.0\mathrm{wt.\%} \leqslant Mn_{weld} \leqslant 3.0\mathrm{wt.\%},$$

preferably $1.0\mathrm{wt.\%} \leq Mn_{weld} \leq 2.5\mathrm{wt.\%}$,

$$0.3\mathrm{wt.\%} \leqslant Al_{weld} \leqslant 1.0\mathrm{wt.\%},$$

preferably $0.4\mathrm{wt.\%} \leq Al_{weld} \leq 0.8\mathrm{wt.\%}$, and

    (a) in the case where $0.27\mathrm{wt.\%} < C_{base} \leq 0.38 \mathrm{wt.\%}$, satisfy:

$$0.32\text{wt.\%} \leqslant C_{weld} \leqslant 0.4\text{wt.\%},$$

$$C_{base} + 0.01\text{wt.\%} \leqslant C_{weld},$$

preferably, $C_{base} + 0.01\text{wt.\%} \leq C_{weld} \leq C_{base} + 0.06\text{wt.\%}$; and

$$10\% \leqslant FA \leqslant 32\%,$$

preferably $10\% \leq FA \leq 30\%$;
(b) in the case where $0.15\text{wt.\%} < C_{base} \leq 0.27\text{wt.\%}$, satisfy:

$$0.19\text{wt.\%} \leqslant C_{weld} \leqslant 0.32\text{wt.\%},$$

preferably $0.19\text{wt.\%} \leq C_{weld} \leq 0.29\text{wt.\%}$,

$$C_{base} + 0.01\text{wt.\%} \leqslant C_{weld},$$

preferably, $C_{base} + 0.01\text{wt.\%} \leq C_{weld} \leq C_{base} + 0.11\text{wt.\%}$, more preferably, $C_{base} + 0.01\text{wt.\%} \leq C_{weld} \leq C_{base} + 0.1\text{wt.\%}$, and

$$10\% \leqslant FA \leqslant 30\%,$$

preferably $10\% \leq FA \leq 26\%$; or
(c) in the case where $0.05\text{ wt.\%} < C_{base} \leq 0.15\text{wt.\%}$, satisfy:

$$0.05\text{wt.\%} \leqslant C_{weld} \leqslant 0.32\text{wt.\%},$$

preferably $0.05\text{wt.\%} \leq C_{weld} \leq 0.27\text{wt.\%}$,

$$C_{base} + 0.01\text{ wt.\%} \leqslant C_{weld},$$

preferably, $C_{base} + 0.01\text{wt.\%} \leq C_{weld} \leq C_{base} + 0.30\text{wt.\%}$, and

$$10\% \leqslant FA \leqslant 25\%,$$

preferably $10\% \leq FA \leq 22\%$;

wherein, when the tensile strengths of said first coated steel sheet and said second coated steel sheet are different, $C_{base}$ represents the carbon content of the one with the relatively lower tensile strength among said first coated steel sheet and said second coated sheet; when the tensile strengths of said first coated steel sheet and said second coated steel sheet are the same, $C_{base}$ represents the carbon content of any one of said first coated steel sheet and said second coated steel sheet.

2. The hot-stamped component according to claim 1, wherein the ferrite content in the weld seam after hot stamping is not more than 5% by volume, preferably not more than 2%.

3. The hot-stamped component according to claim 1 or 2, wherein, after hot stamping, the hardness of the weld seam satisfies the following conditions:

(a) in the case where the tensile strength grades of said first coated steel sheet and said second coated steel sheet are the same, satisfy $HV_{weld} \geq HV_{base}$;
(b) in the case of $T_1 \times YS_1 \geq 0.9 \times T_2 \times YS_2$, satisfy $HV_{weld0.2} \geq HV_{high\text{-}}$strength base;
(c) in the case of $T_1 \times YS_1 < 0.9 \times T_2 \times YS_2$, satisfy $HV_{weld} \geq HV_{low\text{-}}$strength base;

wherein, $YS_1$ is the yield strength of the one with the lower yield strength among said first coated steel sheet and said second coated steel sheet, $T_1$ is the thickness of the one with the lower yield strength among said first coated steel sheet and said second coated steel sheet, $YS_2$ is the yield strength of the one with the higher yield strength among said first coated steel sheet and said second coated steel sheet, $T_2$ is the thickness of the one with the higher yield strength among said first coated steel sheet and said second coated steel sheet, $HV_{weld}$ is the hardness of the weld seam after hot stamping, $HV_{base}$ is the hardness of said first coated steel sheet or said second coated steel sheet after hot stamping, $HV_{high\text{-}strength\ base}$ is the hardness of the one with the higher yield strength among said first coated steel sheet and said second coated steel sheet after hot stamping, $HV_{weld0.2}$ is the hardness within 0.2mm from the fusion line on the side of the one with the higher yield strength among said first coated steel sheet and said second coated steel sheet after hot stamping, $HV_{low\text{-}strength\ base}$ is the hardness of the one with the lower yield strength among said first coated steel sheet and said second coated steel sheet after hot stamping.

4. A laser tailor-welded component, comprising:

a first pre-coated steel sheet provided with a first pre-coating composed of aluminum or an aluminum alloy;
a second pre-coated steel sheet provided with a second pre-coating composed of aluminum or an aluminum alloy; and
a weld seam connecting said first pre-coated steel sheet to said second pre-coated steel sheet,
wherein said weld seam has a weld evaluation factor FA= $10Mn_{weld}$+ $77C_{weld}$-$1900Al_{weld}^2$-$12Al_{weld}$, wherein $Mn_{weld}$, $C_{weld}$, $Al_{weld}$ are the manganese, carbon, and aluminum content in the weld seam by weight percentage, respectively,
wherein the alloy composition of said weld seam and said weld evaluation factor FA satisfy the following conditions:

$$1.0\mathrm{wt.\%} \leqslant Mn_{weld} \leqslant 3.0\mathrm{wt.\%},$$

$$0.3\mathrm{wt.\%} \leqslant Al_{weld} \leqslant 1.0\mathrm{wt.\%},$$

and

(a) in the case where $0.27\mathrm{wt.\%} < C_{base} \leq 0.38\mathrm{wt.\%}$, satisfy:

$$0.32\mathrm{wt.\%} \leqslant C_{weld} \leqslant 0.4\mathrm{wt.\%},$$

$$C_{base}+0.01\mathrm{wt.\%} \leqslant C_{weld},$$

preferably, $C_{base}+0.01\mathrm{wt.\%} \leq C_{weld} \leq Cbase+ 0.06\mathrm{wt.\%}$; and

$$10\% \leqslant FA \leqslant 32\%,$$

preferably $10\% \leq FA \leq 30\%$;
(b) in the case where $0.15\mathrm{wt.\%} < C_{base} \leq 0.27\mathrm{wt.\%}$, satisfy:

$$0.19\mathrm{wt.\%} \leqslant C_{weld} \leqslant 0.32\mathrm{wt.\%},$$

preferably $0.19\mathrm{wt.\%} \leq C_{weld} \leq 0.29\mathrm{wt.\%}$,

$$C_{base}+0.01\mathrm{wt.\%} \leqslant C_{weld},$$

preferably, $C_{base}+0.01\mathrm{wt.\%} \leq C_{weld} \leq C_{base} + 0.11\mathrm{wt.\%}$, more preferably, $C_{base}+0.01\mathrm{wt.\%} \leq C_{weld} \leq C_{base} +0.1\mathrm{wt.\%}$, and

$$10\% \leqslant FA \leqslant 30\%,$$

preferably 10%≤FA≤26%; or
(c) in the case where 0.05wt.% < $C_{base}$≤0.15wt.%, satisfy:

$$0.05\text{wt.\%} \leqslant C_{weld} \leqslant 0.32\text{wt.\%},$$

preferably 0.05wt.%≤ $C_{weld}$ ≤ 0.27wt.%,

$$C_{base}+0.01\text{wt.\%} \leqslant C_{weld},$$

preferably, $C_{base}$+0.01wt.%≤ $C_{weld}$≤ Cbase+ 0.30wt.%, and

$$10\% \leqslant FA \leqslant 25\%,$$

preferably 10%≤FA≤22%;

wherein, when the tensile strengths of said first pre-coated steel sheet and said second pre-coated steel sheet are different, $C_{base}$ represents the carbon content of the one with the relatively lower tensile strength among said first pre-coated steel sheet and said second pre-coated steel sheet; when the tensile strengths of said first pre-coated steel sheet and said second pre-coated steel sheet are the same, $C_{base}$ represents the carbon content of any one of said first pre-coated steel sheet and said second pre-coated steel sheet;
wherein, the thickness of said first pre-coating and/or said second pre-coating is 6 μ m~19 μ m, preferably 8 μ m~16 μ m, more preferably 10 μ m~16 μ m.

5. The laser tailor-welded component according to claim 4, wherein the thickness of said first pre-coated steel sheet and/or said second pre-coated steel sheet is 0.8~3.0mm, preferably 1.0~2.5mm.

6. The laser tailor-welded component according to claim 4 or 5, wherein the alloy composition of said weld seam comprises: 1.0wt.%≤ $Mn_{weld}$≤ 2.5wt.%.

7. The laser tailor-welded component according to claim 4 or 5, wherein the alloy composition of said weld seam comprises: 0.4wt.%≤ $Al_{weld}$≤ 0.8wt.%.

8. A welding wire for laser welding of aluminum or aluminum alloy pre-coated steel sheets, comprising the following components by weight percentage: C : 0.30~0.45wt.% , Mn : 1.0~3.0wt.%; preferably C : 0.35~0.45wt.%, Mn: 1.5~2.5wt.%.

9. The welding wire according to claim 8, wherein the hardness of said welding wire is less than 300 HV.

10. A laser welding method for forming the laser tailor-welded component according to any one of claims 4-7, wherein, during laser welding, a welding wire comprising the following components by weight percentage is used: C: 0.30~0.45wt.%, Mn: 1.0~3.0wt.%; preferably C: 0.35~0.45wt.%, Mn: 1.5~2.5wt.%; during welding, the butt gap between said first pre-coated steel sheet and said second pre-coated steel sheet is 0~0.5mm.

11. The laser welding method according to claim 10, wherein the welding wire filler amount is 5-30%.

12. A method for producing a hot-stamped component, comprising the following steps:

A) providing a laser tailor-welded component according to any one of claims 4-7;
B) complete austenitization treatment: heating the laser tailor-welded component from step A) to above 900° C and holding;
C)hot stamping forming treatment: after completing step B), transferring the heated laser tailor-welded component to a press for hot deformation and cooling within the mold to below 300° C to obtain the hot-stamped component.

Figure 1

Figure 2

## INTERNATIONAL SEARCH REPORT

| | |
|---|---|
| International application No. | |
| **PCT/CN2024/119654** | |

**A. CLASSIFICATION OF SUBJECT MATTER**

F16B5/08(2006.01)i; B23K35/30(2006.01)i; B23K26/21(2014.01)i; B21D22/02(2006.01)i

According to International Patent Classification (IPC) or to both national classification and IPC

**B. FIELDS SEARCHED**

Minimum documentation searched (classification system followed by classification symbols)

IPC: F16B,B23K,B21D

Documentation searched other than minimum documentation to the extent that such documents are included in the fields searched

Electronic data base consulted during the international search (name of data base and, where practicable, search terms used)

CNTXT, VEN, ENTXTC, DWPI, CJFD: 江苏育材堂车身技术有限公司, 育材堂(苏州)材料科技有限公司, 热冲压, 钢板, 镀层, 铝, 焊缝, 焊接, 焊丝, 激光, 拼焊, 抗拉, 强度, 硬度, C, Mn, AL, hot, stamp+, steel, aluminum, weld+, wire, laser, strength, hardness.

**C. DOCUMENTS CONSIDERED TO BE RELEVANT**

| Category* | Citation of document, with indication, where appropriate, of the relevant passages | Relevant to claim No. |
|---|---|---|
| PX | CN 117662581 A (JIANGSU EASYFORMING CAR BODY TECHNOLOGY CO., LTD. et al.) 08 March 2024 (2024-03-08) description, specific embodiments, and figures 1-2 | 1-12 |
| X | CN 112455024 A (EASYFORMING (SUZHOU) MATERIALS TECHNOLOGY CO., LTD.) 09 March 2021 (2021-03-09) description, specific embodiments, and figures 1-20 | 1-7, 12 |
| X | CN 112548395 A (WUXI LANGSHION LIGHTWEIGHT TECHNOLOGY CO., LTD.) 26 March 2021 (2021-03-26) description, specific embodiments, and figures 1-6 | 1 |
| X | CN 111065486 A (BAOSTEEL TAILORED BLANKS GMBH) 24 April 2020 (2020-04-24) description, specific embodiments, and figures 1-5 | 8, 9 |
| Y | CN 112455024 A (EASYFORMING (SUZHOU) MATERIALS TECHNOLOGY CO., LTD.) 09 March 2021 (2021-03-09) description, specific embodiments, and figures 1-20 | 10, 11 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 November 2024** | **23 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

<table>
<tr><td>International application No.</td></tr>
<tr><td>**PCT/CN2024/119654**</td></tr>
</table>

**C.     DOCUMENTS CONSIDERED TO BE RELEVANT**

| Category* | Citation of document, with indication, where appropriate, of the relevant passages | Relevant to claim No. |
|---|---|---|
| Y | CN 113302016 A (ARCELORMITTAL S.A.) 24 August 2021 (2021-08-24)<br>description, specific embodiments, and figures 1-5 | 10, 11 |
| A | CN 114986014 A (MAANSHAN IRON & STEEL CO., LTD.) 02 September 2022<br>(2022-09-02)<br>entire document | 1-12 |
| A | KR 20220096914 A (MS AUTOTECH CO., LTD.) 07 July 2022 (2022-07-07)<br>entire document | 1-12 |

Form PCT/ISA/210 (second sheet) (July 2022)

**INTERNATIONAL SEARCH REPORT**
Information on patent family members

International application No.

**PCT/CN2024/119654**

| Patent document cited in search report | | | Publication date (day/month/year) | Patent family member(s) | | | Publication date (day/month/year) |
|---|---|---|---|---|---|---|---|
| CN | 117662581 | A | 08 March 2024 | None | | | |
| CN | 112455024 | A | 09 March 2021 | CN | 112455024 | B | 27 April 2021 |
| | | | | WO | 2022165930 | A1 | 11 August 2022 |
| | | | | KR | 20230142756 | A | 11 October 2023 |
| | | | | EP | 4289614 | A1 | 13 December 2023 |
| CN | 112548395 | A | 26 March 2021 | None | | | |
| CN | 111065486 | A | 24 April 2020 | US | 2020189035 | A1 | 18 June 2020 |
| | | | | HUE | 056802 | T2 | 28 March 2022 |
| | | | | PL | 3678812 | T3 | 20 December 2021 |
| | | | | WO | 2019048172 | A1 | 14 March 2019 |
| | | | | DE | 102017120611 | A1 | 07 March 2019 |
| | | | | DE | 102017120611 | B4 | 25 June 2020 |
| | | | | PT | 3678812 | T | 21 October 2021 |
| | | | | EP | 3678812 | A1 | 15 July 2020 |
| | | | | EP | 3678812 | B1 | 29 September 2021 |
| | | | | ES | 2894761 | T3 | 15 February 2022 |
| CN | 113302016 | A | 24 August 2021 | KR | 20230003628 | A | 06 January 2023 |
| | | | | KR | 102644413 | B1 | 06 March 2024 |
| | | | | CA | 3123831 | A1 | 02 July 2020 |
| | | | | KR | 20240033182 | A | 12 March 2024 |
| | | | | KR | 20210095183 | A | 30 July 2021 |
| | | | | KR | 102516333 | B1 | 30 March 2023 |
| | | | | WO | 2020136585 | A1 | 02 July 2020 |
| | | | | WO | 2020136402 | A1 | 02 July 2020 |
| | | | | MX | 2021007655 | A | 11 August 2021 |
| | | | | EP | 3902651 | A1 | 03 November 2021 |
| | | | | JP | 2023169155 | A | 29 November 2023 |
| | | | | JP | 7576671 | B2 | 31 October 2024 |
| | | | | ZA | 202104103 | B | 28 April 2022 |
| | | | | US | 2022072658 | A1 | 10 March 2022 |
| | | | | JP | 2022515425 | A | 18 February 2022 |
| | | | | JP | 7337934 | B2 | 04 September 2023 |
| | | | | BR | 112021012345 | A2 | 31 August 2021 |
| CN | 114986014 | A | 02 September 2022 | None | | | |
| KR | 20220096914 | A | 07 July 2022 | KR | 102422579 | B1 | 21 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104023899 A
- CN 111215751 A
- CN 111230301 A
- CN 111432975 A